# EUROPEAN PATENT APPLICATION

(11) **EP 4 472 268 A1**
(43) Date of publication of application: **04.12.2024**
(21) Application number: 23759307.4
(22) Date of filing: 27.02.2023
(51) Int. Cl.: H04W 24/02

(54) **DATA TRANSMISSION METHOD, AND TERMINAL AND NETWORK-SIDE DEVICE**

(30) Priority: 28.02.2022 CN 202210193681
(71) Applicant: VIVO MOBILE COMMUNICATION CO., LTD., Dongguan, Guangdong 523863 (CN)
(72) Inventor: LIU, Jiamin, Dongguan, Guangdong 523863 (CN)
(74) Representative: Murgitroyd & Company
(86) International application number: PCT/CN2023/078344
(87) International publication number: WO 2023/160686

(57) **Abstract**

This application discloses a data transmission method, a terminal, and a network side device, and pertains to the field of communication technologies. The data transmission method in embodiments of this application includes: A first terminal transmits target data to a network side device based on a common channel. The target data is non-control-plane data. The common channel is a channel for a terminal group to perform resource sharing, the terminal group includes a plurality of terminals, and the plurality of terminals include the first terminal.

## Description

### CROSS-REFERENCE TO RELATED APPLICATIONS

This application claims priority to Chinese Patent Application No. 202210193681.2, filed with the China National Intellectual Property Administration on February 28, 2022 and entitled "DATA TRANSMISSION METHOD, TERMINAL, AND NETWORK SIDE DEVICE", which is incorporated herein by reference in its entirety.

### TECHNICAL FIELD

This application pertains to the field of communication technologies, and specifically relates to a data transmission method, a terminal, and a network side device.

### BACKGROUND

In the related art, when a terminal side needs to report a data acquisition result or the like to a network side, the terminal side needs to first enter a connected state and establish a corresponding signaling radio bearer (Signaling Radio Bearer, SRB) and/or data radio bearer (Data Radio Bearer, DRB), and then reports data through a data transmission pipeline dedicated to the terminal.

However, terminal state transition, bearer establishment, and the like in the foregoing process cause problems of large signaling overheads and large data transmission delay.

### SUMMARY

Embodiments of this application provide a data transmission method, a terminal, and a network side device, to resolve problems of large signaling overheads and large data transmission delay in the related art.

According to a first aspect, a data transmission method is provided, including: A first terminal transmits target data to a network side device based on a common channel. The target data is non-control-plane data. The common channel is a channel for a terminal group to perform resource sharing, the terminal group includes a plurality of terminals, and the plurality of terminals include the first terminal.

According to a second aspect, a data transmission method is provided, including: A network side device receives target data that is transmitted by a first terminal based on a common channel. The common channel is a channel for a terminal group to perform resource sharing, the terminal group includes a plurality of terminals, and the plurality of terminals include the first terminal.

According to a third aspect, a data transmission apparatus is provided, applied to a first terminal. The apparatus includes a first transmission module, configured to transmit target data to a network side device based on a common channel. The target data is non-control-plane data. The common channel is a channel for a terminal group to perform resource sharing, the terminal group includes a plurality of terminals, and the plurality of terminals include the first terminal.

According to a fourth aspect, a data transmission apparatus is provided, applied to a network side device. The apparatus includes a second transmission module, configured to receive target data that is transmitted by a first terminal based on a common channel. The target data is non-control-plane data, the common channel is a channel for a terminal group to perform resource sharing, the terminal group includes a plurality of terminals, and the plurality of terminals include the first terminal.

According to a fifth aspect, a terminal is provided. The terminal includes a processor and a memory, the memory stores a program or instructions executable on the processor, and when the program or instructions are executed by the processor, steps of the method in the first aspect are implemented.

According to a sixth aspect, a terminal is provided, including a processor and a communication interface. The communication interface is coupled to the processor, and the processor is configured to run a program or instructions, to implement steps of the method in the first aspect.

According to a seventh aspect, a network side device is provided. The network side device includes a processor and a memory, the memory stores a program or instructions executable on the processor, and when the program or instructions are executed by the processor, steps of the method in the second aspect are implemented.

According to an eighth aspect, a network side device is provided, including a processor and a communication interface. The communication interface is coupled to the processor, and the processor is configured to run a program or instructions, to implement steps of the method in the second aspect.

According to a ninth aspect, a wireless communication system is provided, including: a terminal and a network side device. The terminal may be configured to perform steps of the data transmission method in the first aspect, and the network side device may be configured to perform steps of the data transmission method in the second aspect.

According to a tenth aspect, a readable storage medium is provided. The readable storage medium stores a program or instructions, and when the program or instructions are executed by a processor, steps of the method in the first aspect are implemented, or steps of the method in the second aspect are implemented.

According to an eleventh aspect, a chip is provided. The chip includes a processor and a communication interface, the communication interface is coupled to the processor, and the processor is configured to run a program or instructions, to implement steps of the method in the first aspect, or implement steps of the method in the second aspect.

According to a twelfth aspect, a computer program product/program product is provided. The computer program/program product is stored in a storage medium, and the computer program/program product is executed by at least one processor to implement steps of the method in the first aspect, or implement steps of the method in the second aspect.

In the embodiments, the first terminal transmits the target data to the network side device based on the common channel. In this way, problems of large signaling overheads and long transmission delay caused by RRC connection establishment, terminal state transition, and the like can be avoided, and privacy of the terminal can be effectively ensured.

### BRIEF DESCRIPTION OF THE DRAWINGS

FIG. 1 is a diagram of a structure of a wireless communication system according to an example embodiment of this application;
FIG. 2 is a schematic flowchart of a data transmission method according to an example embodiment of this application;
FIG. 3 is a schematic flowchart of a data transmission method according to another example embodiment of this application;
FIG. 4 is a schematic flowchart of a data transmission method according to still another example embodiment of this application;
FIG. 5 is a schematic flowchart of a data transmission method according to still another example embodiment of this application;
FIG. 6 is a schematic flowchart of a data transmission method according to still another example embodiment of this application;
FIG. 7 is a schematic flowchart of a data transmission method according to still another example embodiment of this application;
FIG. 8 is a diagram of a structure of a data transmission apparatus according to an example embodiment of this application;
FIG. 9 is a diagram of a structure of a data transmission apparatus according to another example embodiment of this application;
FIG. 10 is a diagram of a structure of a terminal according to an example embodiment of this application; and
FIG. 11 is a diagram of a structure of a network side device according to an example embodiment of this application.

### DETAILED DESCRIPTION

The technical solutions in the embodiments of this application are clearly described below with reference to the accompanying drawings in the embodiments of this application. It is clear that the described embodiments are merely some rather than all of the embodiments of this application. All other embodiments obtained by persons skilled in the art based on the embodiments of this application fall within the protection scope of this application.

In the specification and claims of this application, terms such as "first" and "second" are used to distinguish similar objects, rather than describe a specific sequence or order. It should be understood that, terms used in such a manner are interchangeable in a proper circumstance, so that the embodiments of this application can be implemented in other orders than those illustrated or described herein. Moreover, objects distinguished by "first" and "second" are usually of a same type, and the numbers of the objects are not limited. For example, there may be one or more first objects. Furthermore, in the specification and claims, "and/or" represents at least one of associated objects, and the character "/" generally indicates an "or" relationship between the associated objects.

It should be noted that, technologies described in the embodiments of this application are not limited to a long term evolution (Long Term Evolution, LTE)/LTE-advanced (LTE-Advanced, LTE-A) system, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), and other systems. The terms "system" and "network" in the embodiments of this application are often used interchangeably, and the technologies described may be applied to the foregoing systems and radio technologies as well as other systems and radio technologies A new radio (New Radio, NR) system is described below for a purpose of illustration, and NR terminology is used in most of the following descriptions. However, the technologies may also be applied to applications other than NR system applications, such as a 6^{th} generation (6^{th} Generation, 6G) communication system.

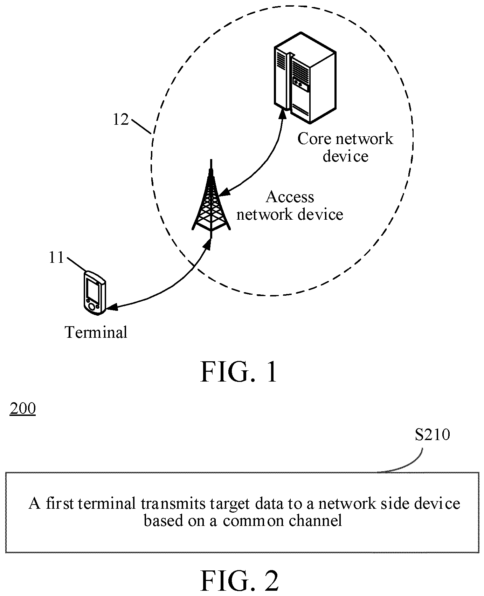

FIG. 1 is a block diagram of a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device having a wireless communication function, such as a refrigerator, a television, a washing machine, or furniture), a game console, a personal computer (personal computer, PC), a teller machine, or a self-service machine. The wearable device includes a smart watch, a smart band, a smart headphone, smart glasses, smart jewelry (a smart bracelet, a smart wrist chain, a smart ring, a smart necklace, a smart anklet, or a smart ankle chain), a smart wrist band, smart clothing, or the like. It should be noted that, a specific type of the terminal 11 is not limited in this embodiment of this application. The network side device 12 may include an access network device or a core network device. The access network device 12 may also be referred to as a radio access network device, a radio access network (Radio Access Network, RAN), a radio access network function, or a radio access network element. The access network device 12 may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting/receiving point (Transmitting/Receiving Point, TRP), or some other proper terminology in the art. The base station is not limited to a specific technical vocabulary provided that the same technical effects are achieved. It should be noted that, in the embodiments of this application, only a base station in an NR system is used as an example for description, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

The technical solutions provided in the embodiments of this application are described in detail below by using some embodiments and application scenarios thereof with reference to the accompanying drawings.

FIG. 2 is a schematic flowchart of a data transmission method 200 according to an example embodiment of this application. The method 200 may be performed by, but not limited to, a first terminal, and may be specifically performed by hardware and/or software installed in the first terminal. In this embodiment, the method may include at least the following step.

S210: The first terminal transmits target data to a network side device based on a common channel.

The target data is non-control-plane data. For example, the target data may include user plane data or data plane data.

The common channel (Common Channel, which may also be referred to as a common pipeline or a Uu common pipeline) is a channel for a terminal group to perform resource sharing, the terminal group includes a plurality of terminals, and the plurality of terminals include the first terminal. The terminal group may be all terminals accessing a specific cell, or may be terminals accessing a specific cell and authenticated, or may be all terminals in a plurality of specified cells, or the like, which is not limited herein.

In this embodiment, "the first terminal transmits target data to a network side device based on a common channel" may be understood as that the first terminal uses a connectionless or weak-connection-based data plane transmission manner. The connectionless or weak-connection-based data plane transmission manner means that when the first terminal needs to transmit the target data, the first terminal may transmit the target data without entering a radio resource control (Radio Resource Control, RRC) connected state or in an RRC inactive state (inactive) (that is, without any dedicated connection to the network side device). In this way, large signaling overheads and delay existing during establishment of a terminal-specific Uu interface connection and a non-access stratum (Non-Access Stratum, NAS) connection in the related art can be saved, and data transmission efficiency can be improved.

In this embodiment, the common channel corresponds to shared information or shared resource scheduling information, the shared information and the shared resource scheduling information are used for data transmission of the terminal group, the shared information includes at least one of shared resource information and shared configuration information, and the shared resource scheduling information is used to obtain the shared resource information. Based on this, each terminal in the terminal group uses the same shared information or shared resource scheduling information. That is, the foregoing process in which the first terminal transmits the target data to the network side device based on the common channel may include: The first terminal transmits the target data to the network side device according to the shared information or the shared resource scheduling information. Based on this, the common channel may be occupied by the terminals in the terminal group through resource preemption, and then the network side device determines whether contention succeeds (that is, whether data transmission succeeds).

It should be noted that during data transmission performed based on the common channel in this embodiment, user privacy or user identity information can be further hidden, so that the network side device does not learn of a transmitting end of the target data, to achieve full concealment of personal information of the terminal and ensure privacy security of the terminal. For example, the target data transmitted based on the common channel does not carry or correspond to identity identification information. The identity identification information is used by the network side device to identify the first terminal. The identity identification information may be an S-temporary mobile subscription identifier (S-Temporary Mobile Subscription Identifier, S-TMSI), a phone number, a user identity, a local terminal identifier, or the like.

In addition, if the network side device is an access network device, after receiving the target data, the access network device may transmit the target data to a core network device based on an end-to-end common pipeline (such as CU-UPF, gNB-UPF, CU-data plane function (Data Plane Function, DPF) (a core network data anchor configured to process a data plane), or gNB-DPF) between the core network device and the access network device. The target data transmitted based on the common pipeline does not carry or correspond to identity identification information, either. The identity identification information is used by the core network device to identify the first terminal. This can further ensure privacy of the first terminal.

Establishment of the common pipeline may be similar to an existing signaling process between a next-generation NodeB (next-Generation NodeB, gNB) and an AMF/UPF, for example, signaling processes such as N2 common channel establishment (Establishment), modification (modification), release (release), and management (management) for establishment, modification, release, and management of an N2 common pipeline.

In this embodiment, the first terminal transmits the target data to the network side device based on the common channel. In this way, establishment of a terminal-specific Uu interface connection and terminal state transition can be avoided, so that signaling overheads can be reduced, data transmission delay can be shortened, and transmission efficiency can be improved. In addition, privacy of the terminal can be ensured through user identity information concealment.

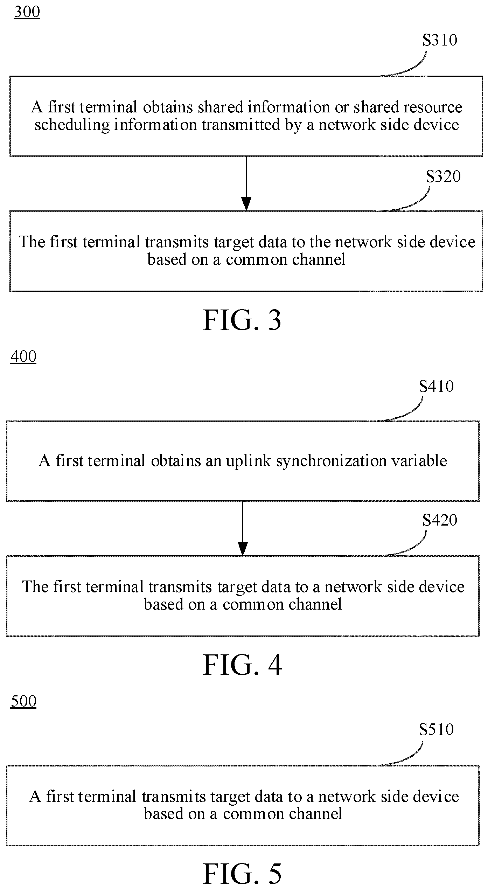

FIG. 3 is a schematic flowchart of a data transmission method 300 according to an example embodiment of this application. The method 300 may be performed by, but not limited to, a first terminal, and may be specifically performed by hardware and/or software installed in the first terminal. In this embodiment, the method 300 may include at least the following steps.

S310: The first terminal obtains shared information or shared resource scheduling information transmitted by a network side device.

Depending on different communication scenarios, the first terminal may obtain the shared information or the shared resource scheduling information in a plurality of manners, for example, the following manner 1 and manner 2.

Manner 1: In a case that authentication on a data plane function of the first terminal succeeds or the first terminal enables the data plane function, the first terminal receives RRC signaling from the network side device. The RRC signaling includes the shared information or the shared resource scheduling information. In other words, in a case that authentication on the data plane function of the first terminal succeeds or the first terminal enables the data plane function, the network side device may configure the shared information or the shared resource scheduling information for the first terminal by using RRC signaling, so that the first terminal performs data transmission on a common channel by using the shared information or the shared resource scheduling information.

It is limited in the manner of obtaining from RRC signaling that only an authorized terminal and/or a terminal having a data plane function enabled can obtain a related resource configuration, which cannot be obtained by another terminal, thereby avoiding malicious occupation of a common resource (that is, the shared information or the shared resource scheduling information) by another terminal that is unauthorized.

It can be understood that although the shared information or the shared resource scheduling information is shared by terminals in a terminal group, the RRC signaling is dedicated to transmitting the shared information or the shared resource scheduling information to the first terminal.

In addition, for the "authentication succeeds" mentioned in Manner 1, the first terminal may receive an authentication success result, to determine, according to the authentication success result, whether the authentication succeeds. For example, the authentication success result indicates that the terminal is allowed to perform data plane reporting, or indicates that the first terminal is allowed to perform data transmission by using the shared information or the shared resource scheduling information.

Based on this, a transmission trigger time of the RRC signaling may be determined according to any one of the following first time, second time, third time, and fourth time, which are specifically as follows:

First time: The first time is a time when the first terminal completes the authentication on the data plane function. For example, when the first terminal completes the authentication on the data plane function, for example, performs data plane function related authentication in an attachment (attach) process or another core network process, a core network device transmits an authentication success result to an access network device (for example, a gNB). Based on this, the gNB may transmit, to the first terminal by using RRC signaling, a resource (that is, the shared information or the shared resource scheduling information) for data plane transmission, for use when the first terminal needs to perform data transmission based on the common channel.

Second time: The second time is a time when the core network device determines to enable data plane transmission. For example, when the core network device determines to enable data plane reporting of the first terminal or data plane reporting of a plurality of terminals including the first terminal, the information is indicated to the gNB. Based on this, the gNB may transmit, to the first terminal by using RRC signaling, a resource (that is, the shared information or the shared resource scheduling information) for data plane transmission, for use when the first terminal needs to perform data transmission based on the common channel. The first terminal or the plurality of terminals including the first terminal are authenticated.

Third time: The third time is a time when the first terminal determines to enable data plane transmission of the first terminal. For example, when the first terminal determines to enable data plane reporting of the first terminal, the information is reported to the gNB. Based on this, the gNB may transmit, to the first terminal by using RRC signaling, a resource (that is, the shared information or the shared resource scheduling information) for data plane transmission, for use when the first terminal needs to perform data transmission based on the common channel. The authentication on the data plane function of the first terminal succeeds.

Fourth time: The fourth time is a time when the access network device determines to enable data plane transmission. For example, when the access network device determines to enable data plane reporting of the first terminal or data plane reporting of a plurality of terminals including the first terminal, the access network device may transmit, to the first terminal by using RRC signaling, a resource (that is, the shared information or the shared resource scheduling information) for data plane transmission, for use when the first terminal needs to perform data transmission based on the common channel. The first terminal or the plurality of terminals including the first terminal are authenticated.

It should be noted that although the first terminal obtains the shared information or the shared resource scheduling information from the RRC signaling, it does not mean that the first terminal needs to remain in a connected state to implement the data plane function. In fact, only when obtaining the shared information or the shared resource scheduling information, the first terminal needs to be in the connected state, while ensuring that the network side device learns of an authenticated identity of the first terminal and does not transmit the common resource to another terminal that is unauthorized. After obtaining the shared information or the shared resource scheduling information, the first terminal may transmit target data in any state on the common channel. For example, the first terminal may transmit data information of the first terminal in an idle state (Idle) by using the shared information or the shared resource scheduling information, may transmit data information of the first terminal in an inactive state (Inactive) by using the shared information or the shared resource scheduling information, and may transmit data information of the first terminal in the connected state by using the shared information or the shared resource scheduling information. In short, use of the shared information or the shared resource scheduling information is independent of the RRC states of the first terminal.

Manner 2: The first terminal receives common signaling from the network side device. The common signaling includes the shared information or the shared resource scheduling information. The common signaling includes at least a system information block (System Information Block, SIB). Different from the manner of obtaining shared information or shared resource scheduling information from RRC signaling in Manner 1, the manner of obtaining from common signaling in Manner 2 is a manner similar to a SIB. The network side device transmits the shared information or the shared resource scheduling information to all terminals in a common channel manner.

Herein, assuming that the common signaling is a SIB, the shared information or the shared resource scheduling information may be directly carried in one or more SIBs. Optionally, the network side device may further perform security processing such as encryption or special encoding on the shared information or the shared resource scheduling information in the SIB, so that only a terminal signed up with an operator or having a data plane authorized can obtain a decoding method or perform security processing to obtain correct shared information or shared resource scheduling information.

It should be noted that the case that the SIB carries the shared resource scheduling information may be understood as two levels of configurations, a first level of configuration is the shared resource scheduling information, and the first terminal can find a second level of configuration (the shared information) only according to the shared resource scheduling information.

Based on this, in a case that the shared information or the shared resource scheduling information is obtained from the common signaling, a validity region corresponding to the shared information or the shared resource scheduling information is the same as a validity region corresponding to the common signaling. For example, in a case that the common signaling is a SIB, region validity of the SIB may be reused as region validity of the shared information or the shared resource scheduling information obtained from the SIB, and a region identifier (Identifier, ID) or other region information, such as a valid cell list (cell list), is introduced to indicate a validity region range of the shared information or the shared resource scheduling information in the SIB. Certainly, the first terminal may not read new shared resource information in the validity region, but in a different region, or after the resource information is invalid, or when a resource is changed, the first terminal needs to re-read shared information or shared resource scheduling information.

In addition, in a case that the shared information is obtained from the common signaling, the first terminal obtains changed shared information or shared resource scheduling information by monitoring a paging (paging) message. For example, the network side device notifies the first terminal of the system information change by using the paging message, and then the first terminal autonomously reads the changed shared information or shared resource scheduling information in a SIB.

Alternatively, the first terminal obtains changed shared resource scheduling information by periodically monitoring a notification. That is, the first terminal may be notified of the change of the shared resource scheduling information by periodically monitoring a notification (notification). Once the first terminal finds that the shared resource scheduling information is changed, the first terminal reads new shared information immediately or in a next modification periodicity.

It should be noted that in the manner of obtaining shared information or shared resource scheduling information from common signaling in Manner 2, the terminal is prevented from entering the connected state to obtain a resource or scheduling information, dedicated signaling overheads of a plurality of users are better saved, flexible scheduling of cells is more facilitated, a timely change of scheduling information or resource information in a same cell is facilitated, and the common signaling manner has higher transmission efficiency. However, a higher-layer manner is required to prevent an unrelated terminal from reading and occupying valid information, and a security operation is required for content in an encoding manner or a secure processing manner only for an authorized user, to achieve an effect that only an expected user can obtain the content.

Further, in an implementation, the shared information obtained by the first terminal in Manner 1 and/or Manner 2 includes at least one of the following (100) to (108).

(100) Time domain information of a shared resource, for example, information about a slot (slot) in which the shared resource occurs.

(101) Frequency domain information of the shared resource, for example, bandwidth information.

In an implementation, the time domain information and the frequency domain information of the shared resource may be configured together in a form of a resource block.

(102) Code domain information of the shared resource, for example, preamble (preamble) information or preamble group information.

(103) Transmission parameter used for the shared resource, for example, a modulation and coding scheme used for the shared resource.

(104) Periodicity information of the shared resource, for example, a periodicity length, a start offset, duration length information in one periodicity, or valid pattern (pattern) information in one periodicity.

(105) Transport block size information of the shared resource. For example, different shared resources may have different transport block size limits, and a size of a maximum transport block allowed to be transmitted by a terminal is generally related to a factor such as whether the terminal is synchronized or link quality (for example, reference signal received power (reference signal received power, RSRP)) between the terminal and a network.

(106) Related feedback information of the shared resource, for example, whether the network side device performs feedback, a resource location fed back, or a feedback manner.

(107) Reuse information of the shared resource, for example, the number of retransmissions, the number of consecutive uses, a duration of the consecutive uses, or the number of uses in a specific duration window.

(108) Validity region information corresponding to the shared resource. There is at least one validity region corresponding to the shared resource. The validity region information may be that the shared resource is valid in a single cell, valid within a specific cell list, valid within a specific region identifier, or the like.

In addition, the shared configuration information may include at least one of the following (109) and (110).

(109) Radio-bearer-level configuration information of a DRB, for example, information such as a radio bearer identifier (Radio Bearer ID, RB ID), a packet data convergence protocol (Packet Data Convergence Protocol, PDCP), or an entity configuration (entity configuration).

(110) Configuration information of a radio link control (Radio Link Control, RLC) bearer of the data radio bearer, for example, a logical channel identity (Logical Channel Identity, LCID), an RLC configuration (configuration), or a media access control (Media Access Control, MAC) configuration.

It can be understood that the foregoing shared information is applicable to a case that a shared resource configuration is a static configuration. That is, once determined, shared information required during data transmission remains unchanged for a long time or within a large cell list (cell list). If the shared resource configuration needs to be changed, all terminals need to re-enter the connected state for obtaining.

In addition, in another implementation, the shared resource scheduling information obtained by the first terminal in Manner 1 and/or Manner 2 may be terminal group scheduling information, and the terminal group scheduling information may include at least one of the following (21) and (22).

(21) Terminal group scheduling configuration information. The terminal group scheduling configuration information may include at least one of the following (210) to (213).

(210) Group scheduling identifier, for example, a special data group (data group)-radio network temporary identifier (Radio Network Temporary Identifier, RNTI) or a special search space (search space) configuration.

(211) Periodicity parameter of group scheduling. The periodicity parameter of group scheduling is used to configure a repetition periodicity and/or a modification periodicity of group scheduling, for example, a periodicity length, a start offset, duration length information in one periodicity, or valid pattern information in one periodicity.

(212) Transmission parameter used for group scheduling, for example, a modulation and coding scheme.

(213) Validity region information corresponding to group scheduling. There is at least one validity region corresponding to the group scheduling. For example, the validity region information may be valid in a single cell, valid within a specific cell list, or valid within a specific region identifier.

(22) Group scheduling configuration change information of the terminal group. The group scheduling configuration change information indicates that the terminal group scheduling configuration information is changed, and a new shared resource configuration (that is, shared resource information) needs to be read immediately or in a next modification periodicity.

It can be understood that the first terminal needs to focus on a group scheduling change at any time during data transmission based on the common channel. If group scheduling shows a repeated shared resource configuration, the first terminal may skip the configuration. Once group scheduling shows a shared resource configuration change, the first terminal needs to read a new shared resource configuration immediately or when a next modification periodicity starts, to obtain new shared resource information for further use.

In addition, the foregoing shared information or shared resource scheduling information may include all information used when the first terminal performs transmission based on the common channel, or may include only necessary information used when the first terminal performs transmission based on the common channel, for example, information about a periodicity in which shared information may occur, or data-RNTI information in group scheduling information. When the first terminal needs to transmit the target data based on the common channel, the data-RNTI in the group scheduling information is used to decode possible physical downlink control channel (Physical downlink control channel, PDCCH) scheduling signaling at a configured time domain location. The network side device dynamically schedules a shared resource for the first terminal. The first terminal obtains the scheduled information, and if the scheduled information meets a transmission requirement, for example, a size and/or RSRP threshold requirement is met, the first terminal transmits the target data by using the scheduled resource.

S320: The first terminal transmits the target data to the network side device based on the common channel.

The target data is non-control-plane data, the common channel is a channel for the terminal group to perform resource sharing, the terminal group includes a plurality of terminals, and the plurality of terminals include the first terminal.

It can be understood that for an implementation process of S320, refer to the related description in the method embodiment 200. Further, in a possible implementation, before transmitting the target data to the network side device based on the common channel, the first terminal may first determine, based on an action trigger time of the target data, a target resource from shared resources corresponding to the shared information.

The action trigger time may be a time when the first terminal transmits the target data, a time when the target data is generated, a time when a data reporting requirement or higher-layer data is generated, or the like, which is not limited herein.

For example, the first terminal may determine a shared resource in the shared resources corresponding to the shared information that is closest to the action trigger time of the target data as the target resource. Certainly, after the target resource is selected according to the action trigger time, the first terminal may further determine whether the selected target resource meets a configured condition, for example, whether a transport block size of the target resource meets a condition, whether feedback is performed, or reliability.

For another example, a time window that is the closest to the action trigger time of the target data is determined, and at least one shared resource with time domain information located in the time window is selected from the shared resources corresponding to the shared information as the target resource. In a case that there are a plurality of shared resources in the time window, one or more resources may be selected from the plurality of shared resources randomly or according to a priority order, a configuration rule (for example, selecting a smallest resource whose transport block is not less than the target data), or the like as the target resource.

It can be understood that if the common channel corresponds to the shared resource scheduling information, the first terminal needs to first obtain the shared information at a specified location according to the shared resource scheduling information, and then determine the target resource from the shared information according to the action trigger time of the target data.

In addition, to improve reliability of data transmission, in this embodiment, a resource usage condition may be further configured for shared resources of different sizes, so that only a terminal meeting the resource usage condition can use a corresponding resource. That is, only when the resource usage condition is met, the first terminal can use a corresponding shared resource to transmit the target data on the common channel. For example, in a case that the shared information includes a plurality of shared resources, the shared resources correspond to a first resource usage condition. For another example, in a case that the shared resource scheduling information includes a plurality of pieces of shared scheduling information, each piece of shared scheduling information corresponds to a second resource usage condition.

Both the first resource usage condition and the second resource usage condition may be determined according to RSRP. For example, if the first resource usage condition is determined according to RSRP, for example, RSRP 1 corresponds to a shared resource 1, RSRP 2 corresponds to a shared resource 2, RSRP 3 corresponds to a shared resource 3, RSRP 4 corresponds to a shared resource 4, and so on, when RSRP of the first terminal is greater than the RSRP 2 and less than the RSRP 3, the first terminal may use the shared resource 2. It can be understood that the RSRP may be RSRP between a terminal (for example, the first terminal) and a serving cell, and different RSRP thresholds may be set for different resource sizes.

Certainly, for the plurality of shared resources, alternatively, a resource usage condition may be set for only some of the plurality of shared resources, which is not limited herein.

Further, in a possible implementation, because the shared information or the shared resource scheduling information is valid for the terminal group, a situation in which a plurality of terminals in the terminal group simultaneously transmit data based on the common channel may occur, resulting in a collision problem. In view of this, this embodiment resolves the collision problem in a contention resolution manner or a positive acknowledgement manner.

In the "positive acknowledgement manner", after receiving the target data, the network side device may transmit feedback information according to a feedback configuration (for example, correspondingly feeding back acknowledgement or contention resolution information), to indicate whether the target data of the first terminal is successfully transmitted. For example, the network side device transmits first feedback information to the first terminal, and correspondingly, the first terminal receives the first feedback information transmitted by the network side device. The first feedback information indicates whether the target data is successfully transmitted, and the first feedback information includes a positive acknowledgement (Acknowledgement, ACK), a negative acknowledgement (Negative Acknowledgement, NACK), only a positive acknowledgement (only ACK, which is transmitted only in an ACK case, and leads to a NACK by default when not transmitted), or only a negative acknowledgement (only NACK, which is transmitted only in a NACK case, and leads to an ACK by default when not transmitted).

The first feedback information is a downlink resource corresponding to the shared information or the shared resource scheduling information. For example, if the network side device transmits the ACK or the only ACK, it is considered that parsing succeeds, that is, the transmission succeeds. If the network side device transmits the NACK or the only NACK, it is considered that parsing fails, that is, the transmission fails.

For example, a downlink feedback time-frequency resource location is bound by default to or statically configured on a scheduled uplink (Uplink, UL) resource (that is, the shared information or the shared resource scheduling information), or dynamically specified by a PDCCH scheduling the uplink resource. If the network side device correctly receives the target data, the network side device transmits an ACK (that is, the first feedback information) at the downlink feedback (DL feedback) location. The first terminal receives the ACK, then considers that the target data transmitted by the first terminal based on the common channel is successfully transmitted, and ends the data transmission this time. If the ACK is not received, a new transmission is attempted, and the foregoing steps are repeated. If the network side device finds that two or more terminals all transmit data on the UL resource, or fails to detect data of any terminal, the network side device may not transmit an ACK feedback at the feedback location by default, or may transmit a NACK feedback, so that failure may be indicated to all attempting terminals.

In the "contention resolution manner", the first terminal receives second feedback information transmitted by the network side device. The second feedback information includes contention resolution related information, the contention resolution related information is determined by the network side device based on at least a part of the target data, and the contention resolution related information is used by the first terminal to determine whether the target data is successfully transmitted.

For example, a time-frequency location or a time domain location of a corresponding downlink (Downlink, DL) resource is bound by default to or statically configured on a scheduled UL resource (that is, the shared information or the shared resource scheduling information), or dynamically specified by a PDCCH scheduling the uplink resource. If the DL time-frequency location is specified, the first terminal directly reads downlink content at the time-frequency location. If only the time domain location is specified, the first terminal reads the downlink content after reading scheduling at the time domain location. The obtained DL content is content of contention resolution of the first terminal (that is, the contention resolution related information).

In an implementation, the network side device may repeat a part of content (for example, N bytes) of received target data to verify and distinguish an identity of a successful terminal. A terminal that correctly receives contention resolution information of the terminal considers that target data is successfully transmitted, and may end the transmission this time. Otherwise, it is considered that the transmission fails, a new transmission is attempted, and the foregoing steps are repeated. In other words, the second feedback information is downlink scheduling information derived from the shared information or the shared resource scheduling information, and is used to schedule a downlink transmission. The downlink transmission carries a part of the target data, so that the first terminal may compare the part of the target data carried in the downlink transmission with the target data transmitted by the first terminal, and determine, according to a comparison result, whether the transmission succeeds. If the comparison result is consistent, the first terminal considers that the transmission succeeds; otherwise, the transmission fails.

In the positive acknowledgement manner and the contention resolution manner, if the first terminal determines that the data transmission fails this time, the first terminal may attempt in transmit power climb, random delay, or other manners next time, to increase a data transmission success rate and reduce a probability of collision herein.

It can be understood that, because the first terminal transmits the target data based on common information, the network side device does not learn of an identity of the first terminal. In view of this, when the network side device transmits the first feedback information or the second feedback information, a plurality of terminals including the first terminal may receive the first feedback information or the second feedback information, and the plurality of terminals that receive the information may determine whether the first feedback information or the second feedback information is feedback information corresponding to the terminals, or the like.

Further, in a case that the first terminal performs a plurality of target data transmissions on the common channel and the target data is not successfully transmitted, or in a case that a third timer times out and the target data is not successfully transmitted, the first terminal may immediately enter the connected state and transmit first information to the network side device. The first information includes at least data reporting failure information and/or a data reporting failure reason. Alternatively, the first terminal records the data reporting failure reason, and transmits second information to the network side device when entering the connected state. The second information includes at least the data reporting failure information and/or the data reporting failure reason. The third timer is started when the terminal starts the first target data transmission on the common channel.

Optionally, the data reporting failure reason may be but is not limited to terminal location information, link quality information, the number of failed attempts, or the like.

In this embodiment, it is ensured that the terminal can still transmit the data to the network side device through a Uu interface even without establishing a dedicated Uu interface, which ensures that the terminal can efficiently use the common channel for data reporting, reduces reporting signaling overheads without compromising a reporting effect, and improves system efficiency.

FIG. 4 is a schematic flowchart of a data transmission method 400 according to an example embodiment of this application. The method 400 may be performed by, but not limited to, a first terminal, and may be specifically performed by hardware and/or software installed in the first terminal. In this embodiment, the method may include at least the following steps.

S410: The first terminal obtains an uplink synchronization variable.

To ensure uplink synchronization when transmitting target data based on a common channel, the first terminal may obtain an uplink synchronization variable, such as a timing advance (Timing Advance, TA). Based on this, a manner for obtaining the uplink synchronization variable may include any one of the following (31) to (33).

(31) Default value. For example, for small cell coverage or other scenarios, the first terminal may consider by default that the uplink synchronization variable is a default value, for example, "0".

(32) In a case that the first terminal is in a connected state, the first terminal maintains an obtained uplink synchronization variable. For example, for a scenario in which the first terminal is in an RRC connected state, the first terminal maintains an uplink synchronization variable.

(33) In a case that the first terminal is in an idle state or an inactive state, the first terminal obtains the uplink synchronization variable in a two-step random access manner or a four-step random access manner.

For example, when the first terminal is in the idle state or the inactive state, that is, the first terminal is in an out-of-synchronization state, the first terminal may first perform the first data transmission in the two-step random access manner or the four-step random access manner, and after successfully performing contention resolution, use a received uplink synchronization variable as an uplink synchronization variable of the first terminal for subsequent uplink synchronization and transmission.

In addition, in addition to the foregoing (31) and (32), second feedback information transmitted by a network side device may carry uplink synchronization variable (such as TA) information or TA adjustment information for the first terminal to perform uplink synchronization.

Certainly, because the obtained uplink synchronization variable has a specific invalidation or validity range, the first terminal needs to continuously obtain or update the uplink synchronization variable. In view of this, in this embodiment, validity of the uplink synchronization variable is determined according to at least one of the following (41) to (43).

(41) Whether a first timer times out. The first timer is started when the first terminal obtains the uplink synchronization variable. After the first terminal obtains a valid TA, the first timer is started, and a length of the first timer is configured by the network side device for the first terminal by using dedicated signaling or common signaling. Before the first timer times out, the first terminal considers that the TA is valid and may continue to be used. After the first timer times out, the first terminal needs to re-obtain a TA and repeat the process of the first timer.

(42) Whether a movement distance of the first terminal is greater than a first threshold. After obtaining a valid TA, the first terminal monitors a movement distance change of the first terminal, or the like. When the movement distance exceeds a specific threshold, it is considered that the current TA is invalid and cannot be further used, and a TA needs to be re-obtained, and then the foregoing process is repeated.

(43) Whether a change value of RSRP of the first terminal is greater than a second threshold. After obtaining a valid TA, the UE monitors a change in RSRP between the UE and a serving cell. When a value change in the RSRP between the UE and the serving cell exceeds a specific threshold, it is considered that the current TA is invalid and cannot be further used, and a TA needs to be re-obtained, and then the foregoing process is repeated.

Certainly, in a case that the uplink synchronization variable is invalid, the first terminal may re-obtain an uplink synchronization variable directly through a two-step random access process or a four-step random access process. Alternatively, when the first terminal further needs to transmit data to the network side device, the first terminal re-obtains an uplink synchronization variable through a two-step random access process or a four-step random access process. This is not limited herein.

For example, a manner in which the first terminal re-obtains an uplink synchronization variable may be as follows: When an uplink synchronization variable is invalid and an uplink synchronization variable needs to be re-obtained, the uplink synchronization variable is immediately re-obtained in the two-step random access manner or the four-step random access manner. The process may or may not be accompanied by transmission of the target data. Alternatively, when random access fails, the uplink synchronization variable is not immediately obtained, which is delayed until the target data needs to be retransmitted, the two-step random access manner or the four-step random access manner is reused for further reporting, and a new uplink synchronization variable is obtained in the process and stored for use.

S420: The first terminal transmits the target data to the network side device based on the common channel.

The target data is non-control-plane data. The common channel is a channel for a terminal group to perform resource sharing, the terminal group includes a plurality of terminals, and the plurality of terminals include the first terminal.

It can be understood that, for an implementation process of S420, refer to the related description in the method embodiment 200 and/or the method embodiment 300. Further, in a possible implementation, before transmitting the target data to the network side device based on the common channel, the first terminal may first determine whether a current region is the validity region corresponding to the shared information or the shared resource scheduling information. If the first terminal determines that the first terminal is in the validity region corresponding to the shared information or the shared resource scheduling information, the first terminal may transmit the target data on a data plane to the network side device according to the shared information or the shared resource scheduling information.

Otherwise, the first terminal needs to re-obtain shared information or shared resource scheduling information. For example, in a case that the shared information or the shared resource scheduling information is obtained from the RRC signaling, and the first terminal determines that the first terminal is currently not in the validity region corresponding to the shared information or the shared resource scheduling information, the first terminal enters the connected state, and re-requests shared information or shared resource scheduling information from a network side device corresponding to a current region.

For another example, in a case that the shared information or the shared resource scheduling information is obtained from the common signaling, and the first terminal determines that the first terminal is not in the validity region corresponding to the shared information or the shared resource scheduling information, the first terminal re-obtains shared information or shared resource scheduling information from common signaling.

In this embodiment, the terminal obtains the uplink synchronization variable, so that reliability of the data transmission process can be further ensured.

FIG. 5 is a schematic flowchart of a data transmission method 500 according to an example embodiment of this application. The method 500 may be performed by, but not limited to, a first terminal, and may be specifically performed by hardware and/or software installed in the first terminal. In this embodiment, the method may include at least the following step.

S510: The first terminal transmits target data to a network side device based on a common channel.

The common channel is a channel for a terminal group to perform resource sharing, the terminal group includes a plurality of terminals, and the plurality of terminals include the first terminal.

It can be understood that, for an implementation process of S510, refer to the related descriptions in the method embodiments 200 to 400. Further, in a possible implementation, it is considered that the first terminal may transmit the target data through a single data transmission on the common channel or a plurality of data transmissions on the common channel. Then, if the network side device supports both the single data transmission on the common channel and the plurality of data transmissions on the common channel, the first terminal may perform any one of the following Manner 1 to Manner 3.

Manner 1: In a case that a data amount of the target data is less than a third threshold (that is, a resource size of one transmission can carry all the target data), the first terminal transmits the target data based on the single data transmission on the common channel.

Manner 2: In a case that the data amount of the target data is greater than a fourth threshold (that is, the resource size of one transmission cannot carry all the target data), the first terminal transmits the target data based on the plurality of data transmissions on the common channel.

Manner 3: The first terminal determines, according to uplink resources respectively associated with the single data transmission on the common channel and the plurality of data transmissions on the channel, whether to transmit the target data based on the single data transmission on the common channel or the plurality of data transmissions on the common channel.

The single data transmission and the plurality of data transmissions may be independent of each other in resources. For example, independent resources are allocated for the single data transmission and the plurality of data transmissions. When the first terminal selects a corresponding resource, the network side device learns whether the data of the first terminal can be all transmitted for a single time. After this transmission is performed between the first terminal and the network side device, the data transmission on the common channel this time ends.

Alternatively, a resource is reused for the single data transmission and the plurality of data transmissions, so that resource efficiency is higher. Then, in the first transmission, the first terminal may put an explicit or implicit indication of information such as whether there is subsequent data or whether the transmission this time is the single data transmission. For example, the first terminal may put a BSR to directly indicate an amount of to-be-transmitted data, or the first terminal uses a special bit field to indicate whether the single data transmission is performed/whether there is subsequent data, or the like. If the single data transmission is performed, the network side device does not need to allocate a temporary-RNTI or a subsequent resource to the first terminal for a subsequent transmission. After the single data transmission succeeds, both ends end processes respectively. If the plurality of data transmissions are performed, the network side device needs to allocate a temporary-RNTI and a subsequent user equipment (User Equipment, UE)-specific resource to the UE for a subsequent data packet transmission, and the process this time cannot end until the data transmissions are completed.

Further, for the single data transmission and the plurality of data transmission, in an implementation, if the target data is implemented through the single data transmission, and one transport block is transmitted in the single data transmission, in a case that the target data includes a single data packet, the transport block used to carry the target data further includes a first indicator field and/or a second indicator field. The first indicator field may be similar to a length indicator (Length Indicator, LI) field and indicate a length of the target data (or the data packet). The second indicator field may be a padding indicator field and indicate padding information (such as a bit) in the transport block to meet a total size of the resource block.

Alternatively, in a case that the target data includes a plurality of data packets, the plurality of data packets are distinguished by using length indication information LI. In other words, the transport block may include two or even more complete data packets. However, because one transport block does not support segmentation, indication may be performed by using a LI to distinguish different data packets.

In another implementation, if the target data is implemented through the plurality of data transmissions, for the target data, the first terminal performs the first transmission to the network side device based on the common channel; and in a case that the first transmission succeeds and the first terminal receives a temporary RNTI or a temporary identifier (ID) fed back by the network side device, the first terminal performs a subsequent transmission in the plurality of transmissions other than the first transmission based on the temporary RNTI or the temporary ID.

It can be understood that the "first transmission succeeds" may be understood as that the first terminal completes the first transmission and succeeds in contention resolution, establishes a weak connection to the network side device, and obtains a temporary RNTI or a temporary identifier. Then, starting from the second transmission, the network side device may perform dedicated scheduling of subsequent data based on the temporary RNTI or the temporary identifier.

In this case, for the plurality of data transmissions, the first terminal may further transmit a buffer status report (Buffer Status Report, BSR) to the network side device. The BSR is used to notify the network side device of an amount of to-be-transmitted data in the first terminal, so that starting from the second transmission, the network side device may perform dedicated uplink scheduling on the first terminal according to the BSR until all the to-be-transmitted data in the first terminal is successfully transmitted.

A transmission occasion of the BSR may include at least one of the following (51) to (55).

(51) The first transmission in the plurality of transmissions on the common channel. For example, when the first terminal performs the first transmission based on the common channel, the first terminal may explicitly or implicitly report the BSR.

(52) The amount of to-be-transmitted data in the first terminal is different from an amount in the last BSR reporting. For example, after the first BSR reporting or the last BSR reporting, the first terminal has new data to be reported. Then, the first terminal may trigger further BSR reporting, to inform the network side device of a buffer change of the first terminal in time, so that the network side device performs subsequent scheduling of the new data.

(53) A size of an uplink resource scheduled by the network side device is incapable of carrying scheduled data, but is capable of carrying one BSR. For example, when a size of a resource scheduled by the network side device (for example, a base station) is not enough to carry data, but a space is just enough to put one padding BSR, the padding BSR may be reported to the network side device, which includes current real-time buffer information.

(54) All data buffered in the first terminal has been transmitted, but there is still a remaining uplink resource. A buffer size in the BSR equals to 0 (i.e., Buffer size = 0), or the BSR includes at least first indication information. The first indication information indicates that all the data buffered in the first terminal has been transmitted.

(55) There is no transmittable data for an uplink resource scheduled by the network side device based on the temporary RNTI or the temporary ID. A buffer size in the BSR is equal to 0, or the BSR includes at least second indication information. The second indication information indicates that all data buffered in the first terminal has been transmitted. For example, when all the to-be-transmitted data buffered in the first terminal has been transmitted, but there is still a remaining uplink resource in this case, or when there is no transmittable data for the uplink resource scheduled by the network side device, the first terminal may transmit a BSR with Buffer size = 0 to the network side device, to inform the network side device that all the data has been reported this time, and subsequently, the temporary ID or the temporary RNTI may be released and uplink resource grant scheduling may be stopped.

Certainly, in addition to using the BSR with Buffer size = 0 to implicitly indicate that the data transmission ends, the first terminal may perform explicit indication. For example, a special value of a data packet header, such as an end marker field, is used to explicitly indicate the end; or a UP header or a control PDU is used to carry a packet number field to explicitly indicate a total number of UL data packets that need to be transmitted this time, and once the total number is reached, it means the end; or a special control PDU is used to indicate that the data packet transmission this time is completed.

After the first terminal informs, in various manners, the network side device that the data has been transmitted, the first terminal also releases the temporary RNTI or the temporary ID, and does not monitor subsequent scheduling. When target data needs to be transmitted based on the common channel next time, a completely new process of a plurality of data transmissions is started from the first transmission.

It should be noted that, considering that in the plurality of data transmissions based on the common channel, the network side device does not learn of the identity of the terminal that transmits the data, in a case that the target data is transmitted to the network side device through the plurality of transmissions, a plurality of data packets in the plurality of transmissions may be associatively identified by using at least one of the following (61) to (65), so that the network side device can determine that data received from the plurality of transmissions belongs to the same terminal, but does not identify the identity of the terminal.

(61) Local terminal identifier (Local UE ID), which indicates that a plurality of received data packets are associated and may be processed together. For example, data packets of a UE 1 are identified by using a local UE ID 1, and data packets of a UE 2 are identified by using a local UE ID 2. Data packets with a same identifier are processed together, and data packets with different identifiers are processed separately.

(62) Identifier randomly allocated by the network side device, which indicates that a plurality of received data packets are associated and may be processed together. For example, data packets of a UE 1 are identified by using a UE ID 1, and data packets of a UE 2 are identified by using a UE ID 2. Data packets with a same identifier are processed together, and data packets with different identifiers are processed separately.

It should be noted that to integrate a plurality of pieces of data reported successively, (61) or (62) may be combined with (63) or (65).

(63) Sequence number (Sequence Number, SN). That is, an SN identifier is introduced for data of a terminal. For example, SN=0 indicates a start data packet, or a start SN starts from a random number (Random Number), for example, SN = Random number.

Optionally, for the SN, a start marker (Start marker) and/or an end marker (End marker) may be further set. The start marker indicates a start of a data stream, and subsequent data packets are sorted in ascending order of SNs incremented by 1. The end marker indicates an end of the data stream, and subsequently, there are no data packets with the local UE ID. If the data packets have been received in sequence, the local UE ID and a receiving buffer may be released.

For example, for a plurality of data transmission processes on a common DRB, due to an optional need of an in-sequence submission operation, data packets in the plurality of transmissions may be numbered. For example, an SN field is carried, and the SN field generally has an initial value of 0 and is incremented in sequence. An access network device may sort data in ascending order of SNs, and transmit the data to a core network device in sequence, to facilitate sequential processing by the core network device. If reported data does not need to be submitted in sequence, SNs may not be carried, to save header overheads. Whether to carry the SN field and a length of the SN field may be transmitted by the network side device to the first terminal as a part of configuration information of the common DRB by using dedicated signaling or common signaling.

In addition, for N dedicated transmissions of one terminal, the network side device may merge the N transmissions, so that a data packet segment can be supported to better improve resource utilization. The data packet segment needs to carry an SN field. The SN field may include a segment indicator field, a segment offset (Segment Offset, SO) domain, a length indicator (Length Indicator, LI) domain, an end marker field, and the like.

For example, if a size of a second uplink resource allocated to the terminal by the network side device is 500 bytes, and in the UE, a size of a data packet with SN=2 is 300 bytes, and a size of a data packet with SN=3 is 400 bytes, the terminal uses the second uplink resource to carry the entire data packet with SN=2 (SN=2, without segmentation, LI=300) and the first 200 bytes of the data packet with SN=3 (SN=3, a segmented packet, SO=0 (indicating that this segment starts from a byte 0 of the original data packet), LI=200, End marker = False). When the network side further allocates a third UL resource with a size of 200 bytes to the UE, the UE puts a remaining segment with SN=3 (SN=3, a segmented packet, SO=200 (indicating that this segment starts from a byte 200 of the original data packet), LI=200, and End marker = True). The segmentation manner can facilitate better resource utilization and higher transmission efficiency.

(64) Packet number field. The packet number field is located in at least one first data packet, and the first data packet belongs to the plurality of data packets. Optionally, a total number of packets with the local UE ID is carried. Generally, only the first few data packets need to carry the packet number, the following data packets do not need to carry the packet number, and it is considered by default that a recipient learns that. After receiving data packets whose number is the packet number, the recipient considers that all the data packets have been received, and may release the local UE ID and a receiving buffer.

(65) Second timer. The second timer is started when the network side device receives a second data packet, the second data packet is transmitted on a first resource, or the second data packet carries the local identifier of the first terminal, and a timeout of the second timer represents that reception of a data packet associated with the second data packet ends.

For example, after receiving a data packet of each local UE ID, the network side device starts or restarts the second timer. After the second timer times out, it is considered that there is no more data packet of the local UE ID, that is, all data packets of the local UE ID have been received, and the local UE ID and a receiving buffer may be released.

In addition, not only the plurality of data packets in the plurality of data transmissions are associatively identified, but also a data packet in the single data transmission may be identified, to indicate that a piece of data transmitted by the first terminal is merely a single packet. For example, the data packet does not carry the local UE ID, indicating that there is no subsequent data but only the single packet; or the data packet does not have an SN field; or the data packet carries an SN but a start packet is also an end packet, all of which may indicate that the data packet is a single packet. Certainly, if the single packet and the plurality of consecutive packets have been mapped differently at different session, different flow (flow) ID, or different tunnel ID levels, these distinguishing manners are unnecessary. Only when the single packet may be transmitted together with a plurality of data packets, the foregoing manner needs to be further used for distinguishing.

Further, in a case that the plurality of data transmissions on the common channel are completed or all the data buffered in the first terminal has been transmitted, the first terminal releases the temporary RNTI or the temporary ID; or in a case that a fourth timer times out, the first terminal releases the temporary RNTI or the temporary ID. The fourth timer is started when the first terminal triggers the last data transmission in the plurality of data transmissions on the common channel.

Correspondingly, in a case that a fifth timer times out, the network side device releases the temporary RNTI or the temporary ID. The fifth timer is started when the network side device receives, for the last time, data corresponding to the temporary RNTI or the temporary ID.

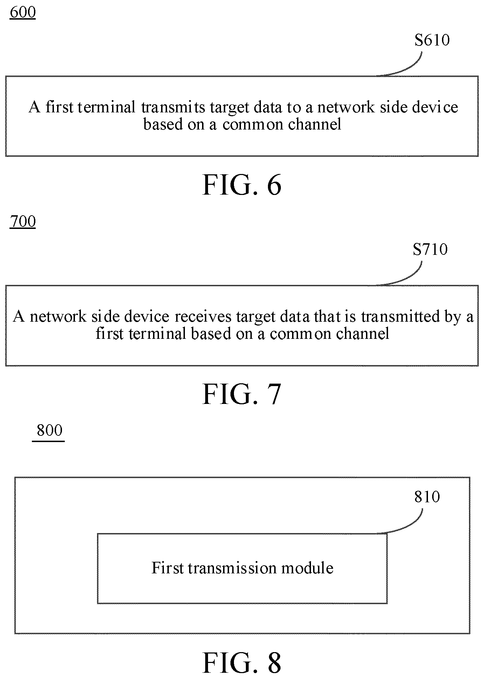

FIG. 6 is a schematic flowchart of a data transmission method 600 according to an example embodiment of this application. The method 600 may be performed by, but not limited to, a first terminal, and may be specifically performed by hardware and/or software installed in the first terminal. In this embodiment, the method may include at least the following step.

S610: The first terminal transmits target data to a network side device based on a common channel.

The target data is non-control-plane data. The common channel is a channel for a terminal group to perform resource sharing, the terminal group includes a plurality of terminals, and the plurality of terminals include the first terminal.

It can be understood that, for an implementation process of S610, refer to the related descriptions in the method embodiments 200 to 500. Further, in a possible implementation, after obtaining a shared resource configuration (that is, shared information or shared resource scheduling information), if moving to another cell, the first terminal may determine whether the new cell belongs to a validity region of the shared resource configuration, for example, whether region IDs are the same or whether the new cell is within a valid cell list range. If the new cell belongs to the same validity region, the shared resource configuration may continue to be used in the new cell. Cross-cell region validity requires configuration negotiation to be performed between cells in advance, so that the plurality of cells use a same shared resource configuration. Generally, this process may be implemented through an interface between base stations and/or in combination with a central unit-distributed unit (Central Unit-Distributed Unit, CU-DU) interface process.

After the first terminal moves to the new cell or another cell outside the validity region, when the first terminal determines, according to the validity region, that the currently configured shared resource configuration cannot be used in the new cell, the first terminal needs to re-enter a connected state in the new target cell, and request a new shared resource configuration from the new target cell. A data plane function can continue to be used in the new cell only after the configuration is obtained.

In addition, if the first terminal performs a single data transmission or a plurality of data transmissions, generally, cell reselection or handover may be performed after the data transmission is successfully completed in a source cell. However, if it is not desirable to affect the cell reselection or handover process, even when the single data transmission or the plurality of data transmissions are not completed, for example, the target data is transmitted based on the common channel, but first feedback information or second feedback information has not been received, the first terminal performs a cell change during data transmission, for example, hands over from a current source cell to a target cell. Then, the first terminal may perform any one of the following (71) to (73).

(71) For the target data, in a case that the first terminal performs the single data transmission on the common channel in the source cell but the transmission is not completed, the first terminal re-performs the single data transmission on the common channel after reselection or handover to the target cell.

(72) For the target data, in a case that the first terminal performs the plurality of data transmissions on the common channel in the source cell and reselects or hands over to the target cell during transmission, the first terminal re-performs the plurality of data transmissions on the common channel in the target cell.

It can be understood that the first terminal accessing the target cell may choose to retransmit, in the target cell, all the target data that needs to be transmitted this time. That is, although a part of the target data has been successfully transmitted in the source cell, because data merging and receiving cannot be performed across cells, so that all data reported this time cannot be completely identified, the first terminal needs to re-report all the target data.

(73) For the target data, in a case that the first terminal performs the plurality of data transmissions on the common channel in the source cell and reselects or hands over to the target cell during transmission, the first terminal further transmits, in the target cell based on the plurality of data transmissions on the common channel, data that is in the target data and that is not transmitted. Each piece of data in the plurality of data transmissions on the common channel has a self-parsing characteristic.

It can be understood that the first terminal accessing the target cell may alternatively choose to transmit, in the target cell, remaining target data that is not transmitted in the source cell. A premise for this implementation is that data in different parts has self-parsing characteristics. This is equivalent to that the former part of the target data is transmitted through the source cell to a core network device, and the latter part of the target data is transmitted through the target cell to the core network device. The core network device does not need to perform data merging or identification, but may process the data parts separately to extract valid information.

Certainly, for (71) to (73), in a case that the first terminal reselects or hands over to the target cell, and a related configuration (such as shared information) for data transmission on the common channel in the target cell is different from a related configuration for data transmission on the common channel in the source cell, the first terminal obtains the related configuration for data transmission on the common channel in the target cell, and the first terminal performs, based on the related configuration for data transmission on the common channel in the target cell, the step of re-performing the single data transmission on the common channel, or re-performing the plurality of data transmissions on the common channel in the target cell, or further transmitting, in the target cell based on the plurality of data transmissions on the common channel, data that is in the target data and that is not transmitted.

That is, after the first terminal enters the target cell, the first terminal needs to re-read the related configuration for data transmission on the common channel in the target cell, and perform retransmission as required in the related configuration for data transmission on the common channel in the target cell. However, if the source cell and the target cell belong to a same configuration region, that is, shared information or shared resource scheduling information is valid in both the source cell and the target cell, the first terminal does not need to re-read the related configuration for data transmission on the common channel in the target cell, but directly retransmits a part or all of the target data.

For the first terminal that leaves the source cell, how a process of the source cell normally ends may follow the following rule.

Because the first terminal clearly learns that the first terminal changes the cell, the first terminal may end a process that is not completed in the source cell. The first terminal clearly learns of all processes, timers, and the like, and restarts an attempt in the target cell.

For a network side device to which the source cell belongs, due to failure to obtain a notification of the first terminal in time, the network side device may not learn that the first terminal has left the source cell, and a process of the network side device continues. However, in some implementations, it may be found that the first terminal is abnormal. For example, in a plurality of transmissions, data of the first terminal fails to be received for a specific duration on a scheduled uplink resource. In this case, it may be considered that the first terminal has left the source cell, and subsequent scheduling may be aborted and the process may be ended.

Further, for terminal states, a terminal state (that is, a first state) in the related art, such as an idle state (Idle), an inactive state (Inactive), or the connected state (Connected) may be independent of a state, mentioned in this embodiment, of transmitting the target data based on the common channel. However, when behavior in an existing state (for example, Idle, Inactive, or Connected) of the terminal conflicts with the state of transmitting the target data based on the common channel, the first terminal may perform processing in the following Manners 1 to 4.

Manner 1: The first terminal performs determining autonomously. The first state includes the connected state, the idle state, or the inactive state. For example, the first terminal may autonomously determine whether to perform the behavior in the first state or perform the target data transmission based on the common channel.

Manner 2: The first terminal performs determining according to a priority order between the first state and the target data transmission on the common channel. For example, if a priority of the behavior in the first state is higher than a priority of the target data transmission based on the common channel, the first terminal performs the behavior in the first state, and vice versa.

Manner 3: In a case that the first state is the connected state, the first terminal processes the first state, and processes the target data transmission on the common channel by reusing a unicast channel in the first state.

Manner 4: In a case that the first state is the inactive state or the idle state, the first terminal processes the target data transmission on the common channel on an occasion other than a first occasion, to avoid related behavior on the first occasion. The first occasion includes at least one of a paging occasion, a system information (SI) monitoring occasion, a measurement occasion, or a change notification monitoring occasion.

In this embodiment, reliability of data transmission during cell reselection or handover of the terminal is ensured, and system efficiency is improved.

FIG. 7 is a schematic flowchart of a data transmission method 700 according to an example embodiment of this application. The method 700 may be performed by, but not limited to, a network side device, and may be specifically performed by hardware and/or software installed in the network side device. In this embodiment, the method 700 may include at least the following step.

S710: The network side device receives target data that is transmitted by a first terminal based on a common channel.

The target data is non-control-plane data, the common channel is a channel for a terminal group to perform resource sharing, the terminal group includes a plurality of terminals, and the plurality of terminals include the first terminal.

Optionally, the shared information includes at least one of the following: time domain information of a shared resource; frequency domain information of the shared resource; code domain information of the shared resource; a transmission parameter used for the shared resource; periodicity information of the shared resource; transport block size information of the shared resource; related feedback information of the shared resource; reuse information of the shared resource; and validity region information corresponding to the shared resource, where there is at least one validity region corresponding to the shared resource; and/or the shared configuration information includes at least one of the following: radio-bearer-level configuration information of a data radio bearer; and configuration information of a radio link control (Radio Link Control, RLC) bearer of the data radio bearer.

Optionally, the shared resource scheduling information includes terminal group scheduling information, and the terminal group scheduling information includes at least one of the following: terminal group scheduling configuration information; and group scheduling configuration change information of the terminal group, where the group scheduling configuration change information indicates that the terminal group scheduling configuration information is changed. The terminal group scheduling configuration information includes at least one of a group scheduling identifier, a periodicity parameter of group scheduling, a transmission parameter used for group scheduling, and validity region information corresponding to group scheduling, and there is at least one validity region corresponding to the group scheduling.

Optionally, the target data transmitted based on the common channel does not carry or correspond to identity identification information, and the identity identification information is used to identify the first terminal.

Optionally, the method further includes: The network side device transmits the shared information or the shared resource scheduling information.

Optionally, the step that the network side device transmits the shared information or the shared resource scheduling information includes: In a case that authentication on a data plane function of the first terminal succeeds or the first terminal enables the data plane function, the network side device transmits radio resource control RRC signaling to the first terminal. The RRC signaling includes the shared information or the shared resource scheduling information, and the RRC signaling is dedicated to transmitting the shared information or the shared resource scheduling information to the first terminal. Alternatively, the network side device transmits common signaling to the first terminal. The common signaling includes the shared information or the shared resource scheduling information.

Optionally, the method further includes: The network side device transmits an authentication success result to the first terminal. The authentication success result indicates that the first terminal is allowed to perform data plane reporting, or indicates that the first terminal is allowed to transmit the target data by using the shared information or the shared resource scheduling information.

Optionally, a transmission trigger time of the RRC signaling is determined according to any one of the following: a first time, where the first time is a time when the first terminal completes the authentication on the data plane function; a second time, where the second time is a time when a core network device determines to enable data plane transmission; a third time, where the third time is a time when the first terminal determines to enable data plane transmission of the first terminal, and the authentication on the data plane function of the first terminal succeeds; and a fourth time, where the fourth time is a time when an access network device determines to enable data plane transmission.

Optionally, in a case that the shared information or the shared resource scheduling information is transmitted by using the common signaling, a validity region corresponding to the shared information or the shared resource scheduling information is the same as a validity region corresponding to the common signaling.

Optionally, in a case that the shared information includes a plurality of shared resources, the shared resources correspond to a first resource usage condition; and/or in a case that the shared resource scheduling information includes a plurality of pieces of shared scheduling information, each piece of shared scheduling information corresponds to a second resource usage condition.

Optionally, in a case that the target data includes a single data packet, a transport block used to carry the target data further includes a first indicator field and/or a second indicator field, the first indicator field indicates a length of the target data, and the second indicator field indicates padding information in the transport block; and/or in a case that the target data includes a plurality of data packets, the plurality of data packets are distinguished by using length indication information LI.

Optionally, the step that the network side device receives target data that is transmitted by a first terminal based on a common channel includes: The network side device receives the first transmission performed for the target data. The network side device transmits a temporary RNTI or a temporary ID, and schedules a subsequent transmission other than the first transmission based on the temporary RNTI or the temporary ID.

Optionally, the method further includes: The network side device receives a buffer status report BSR. The BSR is used to notify the network side device of an amount of to-be-transmitted data in the first terminal. The network side device schedules the subsequent transmission other than the first transmission according to the BSR. A transmission occasion of the BSR includes at least one of the following: the first transmission in a plurality of transmissions on the common channel; the amount of to-be-transmitted data in the first terminal is different from an amount in the last BSR reporting; a size of an uplink resource scheduled by the network side device is incapable of carrying scheduled data, but is capable of carrying one BSR; all data buffered in the first terminal has been transmitted, but there is still a remaining uplink resource, where a buffer size in the BSR equals to 0 (i.e., Buffer size = 0), or the BSR includes at least first indication information, where the first indication information indicates that all the data buffered in the first terminal has been transmitted; or there is no transmittable data for an uplink resource scheduled by the network side device based on the temporary RNTI or the temporary ID, where a buffer size in the BSR is equal to 0, or the BSR includes at least second indication information, where the second indication information indicates that all data buffered in the first terminal has been transmitted.

Optionally, in a case that the target data is transmitted through a plurality of transmissions, a plurality of data packets in the plurality of transmissions are associatively identified by using at least one of the following: a local terminal identifier; an identifier randomly allocated by the network side device; a sequence number SN; a packet number packet number field, where the packet number field is located in at least one first data packet, and the first data packet belongs to the plurality of data packets; and a second timer, where the second timer is started when the network side device receives a second data packet, the second data packet is transmitted on a first resource, or the second data packet carries the local identifier of the first terminal, and a timeout of the second timer represents that reception of a data packet associated with the second data packet ends.

Optionally, the SN includes at least a start marker and/or an end marker.

Optionally, the method further includes: The network side device receives first information or second information. The first information or the second information includes at least data reporting failure information and/or a data reporting failure reason of the first terminal.

Optionally, the method further includes: In a case that a fifth timer times out, the network side device releases the temporary RNTI or the temporary ID. The fifth timer is started when the network side device receives, for the last time, data corresponding to the temporary RNTI or the temporary ID.

Optionally, the method further includes either of the following: The network side device transmits first feedback information. The first feedback information indicates whether the target data is successfully transmitted, and the first feedback information includes a positive acknowledgement ACK, a negative acknowledgement NACK, or only a positive acknowledgement only ACK. Alternatively, the network side device transmits second feedback information. The second feedback information includes contention resolution related information, the contention resolution related information is determined by the network side device based on at least a part of the target data, and the contention resolution related information is used by the first terminal to determine whether the target data is successfully transmitted.

Optionally, the method further includes: In a case that the network side device is an access network device, the access network device transmits the target data to the core network device based on a common pipeline. The target data transmitted based on the common pipeline does not carry or correspond to identity identification information, and the identity identification information is used to identify the first terminal.

It can be understood that, because the implementations mentioned in the method embodiment 700 have the same or corresponding technical features as the foregoing method embodiments 200 to 600, for an implementation process of the method embodiment 700, refer to the related descriptions in the method embodiments 200 to 600, and the same technical effects can be achieved. To avoid repetition, details are not described herein again.

The data transmission method provided in the embodiments of this application may be performed by a data transmission apparatus. The data transmission apparatus provided in the embodiments of this application is described by using an example that the data transmission apparatus performs the data transmission method in the embodiments of this application.

FIG. 8 is a diagram of a structure of a data transmission apparatus 800 according to an example embodiment of this application. The apparatus 800 includes a first transmission module 810, configured to transmit target data to a network side device based on a common channel. The target data is non-control-plane data. The common channel is a channel for a terminal group to perform resource sharing, the terminal group includes a plurality of terminals, and the plurality of terminals include the first terminal.

Optionally, the step that the first transmission module 810 transmits target data to a network side device based on a common channel includes: transmitting the target data to the network side device according to shared information or shared resource scheduling information. The shared information includes at least one of shared resource information and shared configuration information, and the shared resource scheduling information is used to obtain the shared resource information.

Optionally, the shared information includes at least one of the following: time domain information of a shared resource; frequency domain information of the shared resource; code domain information of the shared resource; a transmission parameter used for the shared resource; periodicity information of the shared resource; transport block size information of the shared resource; related feedback information of the shared resource; reuse information of the shared resource; and validity region information corresponding to the shared resource, where there is at least one validity region corresponding to the shared resource; and/or the shared configuration information includes at least one of the following: radio-bearer-level configuration information of a data radio bearer; and configuration information of a radio link control RLC bearer of the data radio bearer.

Optionally, the shared resource scheduling information includes terminal group scheduling information, and the terminal group scheduling information includes at least one of the following: terminal group scheduling configuration information; and group scheduling configuration change information of the terminal group, where the group scheduling configuration change information indicates that the terminal group scheduling configuration information is changed. The terminal group scheduling configuration information includes at least one of a group scheduling identifier, a periodicity parameter of group scheduling, a transmission parameter used for group scheduling, and validity region information corresponding to group scheduling, and there is at least one validity region corresponding to the group scheduling.

Optionally, the target data transmitted based on the common channel does not carry or correspond to identity identification information, and the identity identification information is used to identify the first terminal.

Optionally, the first transmission module 810 is further configured to obtain the shared information or the shared resource scheduling information transmitted by the network side device.

Optionally, the step that the first transmission module 810 obtains the shared information or the shared resource scheduling information transmitted by the network side device includes: in a case that authentication on a data plane function of the first terminal succeeds or the first terminal enables the data plane function, receiving radio resource control RRC signaling from the network side device, where the RRC signaling includes the shared information or the shared resource scheduling information, and the RRC signaling is dedicated to transmitting the shared information or the shared resource scheduling information to the first terminal; or receiving common signaling from the network side device, where the common signaling includes the shared information or the shared resource scheduling information.

Optionally, the first transmission module 810 is further configured to receive an authentication success result. The authentication success result indicates that the terminal is allowed to perform data plane reporting, or indicates that the first terminal is allowed to perform data transmission by using the shared information or the shared resource scheduling information.

Optionally, a transmission trigger time of the RRC signaling is determined according to any one of the following: a first time, where the first time is a time when the first terminal completes the authentication on the data plane function; a second time, where the second time is a time when a core network device determines to enable data plane transmission; a third time, where the third time is a time when the first terminal determines to enable data plane transmission of the first terminal, and the authentication on the data plane function of the first terminal succeeds; and a fourth time, where the fourth time is a time when an access network device determines to enable data plane transmission.

Optionally, in a case that the shared information or the shared resource scheduling information is obtained from the common signaling, a validity region corresponding to the shared information or the shared resource scheduling information is the same as a validity region corresponding to the common signaling.

Optionally, the apparatus 800 further includes a monitoring module, configured to perform at least one of the following: in a case that the shared information is obtained from the common signaling, obtaining changed shared information by monitoring a paging message; and in a case that the shared resource scheduling information is obtained from the common signaling, obtaining changed shared resource scheduling information by monitoring a paging message, or obtaining changed shared resource scheduling information by periodically monitoring a notification.

Optionally, the step that the first transmission module 810 transmits target data to a network side device based on a common channel includes: determining, according to an action trigger time of the target data, a target resource from shared resources corresponding to the shared information; and
transmitting the target data to the network side device based on the target resource.

Optionally, the apparatus 800 further includes a determining module, configured for the step of determining, according to an action trigger time of the target data, a target resource from shared resources corresponding to the shared information, including any one of the following: determining a shared resource in the shared resources corresponding to the shared information that is closest to the action trigger time of the target data as the target resource; or determining a time window that is the closest to the action trigger time of the target data, and selecting, from the shared resources corresponding to the shared information, at least one shared resource with time domain information located in the time window as the target resource.

Optionally, in a case that the shared resources corresponding to the shared information include a plurality of shared resources, the shared resources correspond to a first resource usage condition; and/or in a case that the shared resource scheduling information includes a plurality of pieces of shared scheduling information, the shared scheduling information corresponds to a second resource usage condition.

Optionally, the step that the first transmission module 810 transmits target data to a network side device based on a common channel includes: in a case that the first terminal is in the validity region corresponding to the shared information or the shared resource scheduling information, transmitting the target data on a data plane to the network side device according to the shared information or the shared resource scheduling information.

Optionally, the first transmission module 810 is further configured to perform any one of the following: in a case that the shared information or the shared resource scheduling information is obtained from the RRC signaling, and the first terminal is not in the validity region corresponding to the shared information or the shared resource scheduling information, requesting shared information or shared resource scheduling information from the network side device; or in a case that the shared information or the shared resource scheduling information is obtained from the common signaling, and the first terminal is not in the validity region corresponding to the shared information or the shared resource scheduling information, re-obtaining shared information or shared resource scheduling information from common signaling.

Optionally, the first transmission module 810 is further configured to obtain an uplink synchronization variable. The uplink synchronization variable includes any one of the following: a default value; in a case that the first terminal is in a connected state, the first terminal maintains an obtained uplink synchronization variable; or in a case that the first terminal is in an idle state or an inactive state, the first terminal obtains the uplink synchronization variable in a two-step random access manner or a four-step random access manner. The uplink synchronization variable includes at least a timing advance TA.

Optionally, validity of the uplink synchronization variable is determined according to at least one of the following: whether a first timer times out, where the first timer is started when the first terminal obtains the uplink synchronization variable; whether a movement distance of the first terminal is greater than a first threshold; and whether a change value of RSRP of the first terminal is greater than a second threshold.

Optionally, the first transmission module 810 is further configured to: in a case that the uplink synchronization variable is invalid, re-obtain an uplink synchronization variable directly through a two-step random access process or a four-step random access process; or when the first terminal further needs to transmit data to the network side device, re-obtain an uplink synchronization variable through a two-step random access process or a four-step random access process.

Optionally, in a case that the target data includes a single data packet, a transport block used to carry the target data further includes a first indicator field and/or a second indicator field, the first indicator field indicates a length of the target data, and the second indicator field indicates padding information in the transport block; or in a case that the target data includes a plurality of data packets, the plurality of data packets are distinguished by using length indication information LI.

Optionally, the step that the first transmission module 810 transmits target data to a network side device based on a common channel includes: for the target data, in a case that the first terminal needs to perform a plurality of data transmissions, performing the first transmission to the network side device based on the common channel; and in a case that the first transmission succeeds and the first terminal receives a temporary RNTI or a temporary identifier ID fed back by the network side device, performing a subsequent transmission in the plurality of transmissions other than the first transmission based on the temporary RNTI or the temporary ID.

Optionally, the first transmission module 810 is further configured to transmit a buffer status report BSR to the network side device. The BSR is used to notify the network side device of an amount of to-be-transmitted data in the first terminal. A transmission occasion of the BSR includes at least one of the following: the first transmission in the plurality of transmissions on the common channel; the amount of to-be-transmitted data in the first terminal is different from an amount in the last BSR reporting; a size of an uplink resource scheduled by the network side device is incapable of carrying scheduled data, but is capable of carrying one BSR; all data buffered in the first terminal has been transmitted, but there is still a remaining uplink resource, where a buffer size in the BSR equals to 0 (i.e., Buffer size = 0), or the BSR includes at least first indication information, where the first indication information indicates that all the data buffered in the first terminal has been transmitted; or there is no transmittable data for an uplink resource scheduled by the network side device based on the temporary RNTI or the temporary ID, where a buffer size in the BSR is equal to 0, or the BSR includes at least second indication information, where the second indication information indicates that all data buffered in the first terminal has been transmitted.

Optionally, in a case that the target data is transmitted to the network side device through a plurality of transmissions, a plurality of data packets in the plurality of transmissions are associatively identified by using at least one of the following: a local terminal identifier; an identifier randomly allocated by the network side device; a sequence number SN; a packet number field, where the packet number field is located in at least one first data packet, and the first data packet belongs to the plurality of data packets; and a second timer, where the second timer is started when the network side device receives a second data packet, the second data packet is transmitted on a first resource, or the second data packet carries the local identifier of the first terminal, and a timeout of the second timer represents that reception of a data packet associated with the second data packet ends.

Optionally, the SN includes at least a start marker and/or an end marker.

Optionally, the step that the first transmission module 810 transmits target data to a network side device based on a common channel includes: in a case that data transmission on the common channel includes a single data transmission on the common channel and a plurality of data transmissions on the common channel, performing any one of the following: in a case that a data amount of the target data is less than a third threshold, transmitting the target data based on the single data transmission on the common channel; in a case that the data amount of the target data is greater than a fourth threshold, transmitting the target data based on the plurality of data transmissions on the common channel; or determining, according to uplink resources respectively associated with the single data transmission on the common channel and the plurality of data transmissions on the channel, whether to transmit the target data based on the single data transmission on the common channel or the plurality of data transmissions on the common channel.

Optionally, the step that the first transmission module 810 transmits target data to a network side device based on a common channel includes any one of the following: for the target data, in a case that the first terminal performs the single data transmission on the common channel in a source cell but the transmission is not completed, re-performing the single data transmission on the common channel after reselection or handover to a target cell; for the target data, in a case that the first terminal performs the plurality of data transmissions on the common channel in the source cell and reselects or hands over to the target cell during transmission, re-performing the plurality of data transmissions on the common channel in the target cell; or for the target data, in a case that the first terminal performs the plurality of data transmissions on the common channel in the source cell and reselects or hands over to the target cell during transmission, further transmitting, in the target cell based on the plurality of data transmissions on the common channel, data that is in the target data and that is not transmitted, where each piece of data in the plurality of data transmissions on the common channel has a self-parsing characteristic.

Optionally the first transmission module 810 is further configured to: in a case that the first terminal reselects or hands over to the target cell, and a related configuration for data transmission on the common channel in the target cell is different from a related configuration for data transmission on the common channel in the source cell, obtain the related configuration for data transmission on the common channel in the target cell; and perform, based on the related configuration for data transmission on the common channel in the target cell, the step of re-performing the single data transmission on the common channel, or re-performing the plurality of data transmissions on the common channel in the target cell, or further transmitting, in the target cell based on the plurality of data transmissions on the common channel, data that is in the target data and that is not transmitted.

Optionally, the determining module is further configured to: in a case that a first state that the first terminal is currently in conflicts with target data transmission on the common channel that currently needs to be performed, determine, according to at least one of the following, whether to process the first state or process the target data transmission on the common channel: the first terminal performs determining autonomously, where the first state includes the connected state, the idle state, or the inactive state; the first terminal performs determining according to a priority order between the first state and the target data transmission on the common channel; in a case that the first state is the connected state, the first terminal processes the first state, and processes the target data transmission on the common channel by reusing a unicast channel in the first state; or in a case that the first state is the inactive state or the idle state, the first terminal processes the target data transmission on the common channel on an occasion other than a first occasion, where the first occasion includes at least one of a paging occasion, a system information SI monitoring occasion, a measurement occasion, or a change notification change notification monitoring occasion.

Optionally, the first transmission module 810 is further configured to: in a case that the first terminal performs a plurality of target data transmissions on the common channel and the target data is not successfully transmitted, or in a case that a third timer times out and the target data is not successfully transmitted, perform at least one of the following: entering the connected state, and transmitting first information to the network side device, where the first information includes at least data reporting failure information and/or a data reporting failure reason; or recording the data reporting failure reason, and transmitting second information to the network side device when entering the connected state, where the second information includes at least the data reporting failure information and/or the data reporting failure reason. The third timer is started when the terminal starts the first target data transmission on the common channel.

Optionally, the apparatus further includes a release module, configured to perform any one of the following: in a case that the plurality of data transmissions on the common channel are completed or all the data buffered in the first terminal has been transmitted, releasing the temporary RNTI or the temporary ID; or in a case that a fourth timer times out, releasing the temporary RNTI or the temporary ID. The fourth timer is started when the first terminal triggers the last data transmission in the plurality of data transmissions on the common channel.

Optionally, the first transmission module 810 is further configured to perform any one of the following: receiving first feedback information transmitted by the network side device, where the first feedback information indicates whether the target data is successfully transmitted, and the first feedback information includes a positive acknowledgement ACK, a negative acknowledgement NACK, or only a positive acknowledgement only ACK; or receiving second feedback information transmitted by the network side device, where the second feedback information includes contention resolution related information, the contention resolution related information is determined by the network side device based on at least a part of the target data, and the contention resolution related information is used by the first terminal to determine whether the target data is successfully transmitted.

The data transmission apparatus 800 in this embodiment of this application may be an electronic device, for example, an electronic device having an operating system, or may be a component in the electronic device, for example, an integrated circuit or a chip. The electronic device may be a terminal or another device other than the terminal. For example, the terminal may include but is not limited to the foregoing listed types of the terminal 11, and the another device may be a server or a network attached storage (Network Attached Storage, NAS). This is not specifically limited in this embodiment of this application.

The data transmission apparatus 800 provided in this embodiment of this application can implement processes implemented in the method embodiments of FIG. 2 to FIG. 6, and achieve the same technical effects. To avoid repetition, details are not described herein again.

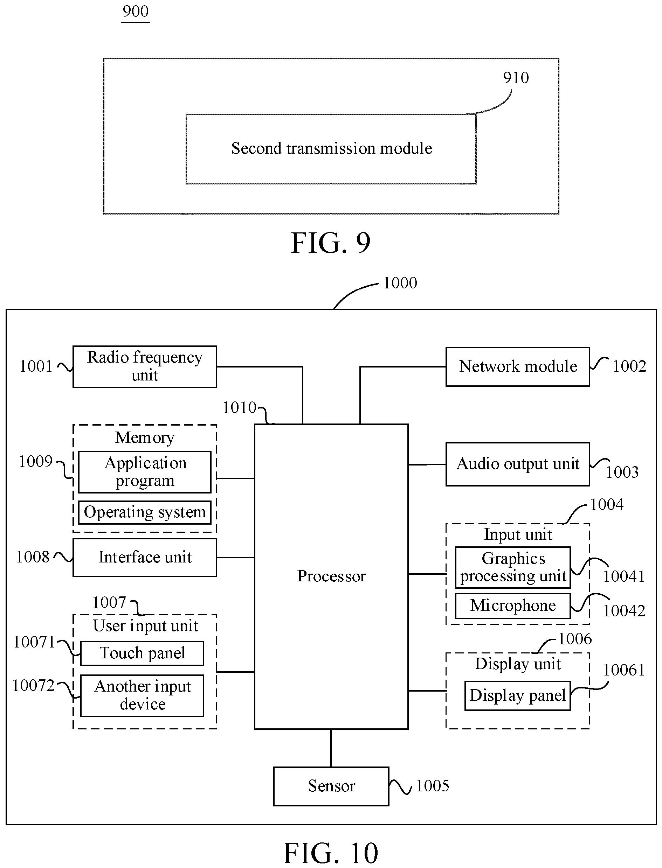

FIG. 9 is a diagram of a structure of a data transmission apparatus 900 according to an example embodiment of this application. The apparatus 900 includes a second transmission module 910, configured to receive target data that is transmitted by a first terminal based on a common channel. The target data is non-control-plane data, the common channel is a channel for a terminal group to perform resource sharing, the terminal group includes a plurality of terminals, and the plurality of terminals include the first terminal.

Optionally, the step that the second transmission module 910 receives target data that is transmitted based on a common channel includes: receiving the target data that is transmitted by the first terminal according to shared information or shared resource scheduling information. The shared information includes at least one of shared resource information and shared configuration information, and the shared resource scheduling information is used to obtain the shared resource information.

Optionally, the shared information includes at least one of the following: time domain information of a shared resource; frequency domain information of the shared resource; code domain information of the shared resource; a transmission parameter used for the shared resource; periodicity information of the shared resource; transport block size information of the shared resource; related feedback information of the shared resource; reuse information of the shared resource; and validity region information corresponding to the shared resource, where there is at least one validity region corresponding to the shared resource; and/or the shared configuration information includes at least one of the following: radio-bearer-level configuration information of a data radio bearer; and configuration information of a radio link control RLC bearer of the data radio bearer.

Optionally, the shared resource scheduling information includes terminal group scheduling information, and the terminal group scheduling information includes at least one of the following: terminal group scheduling configuration information; and group scheduling configuration change information of the terminal group, where the group scheduling configuration change information indicates that the terminal group scheduling configuration information is changed. The terminal group scheduling configuration information includes at least one of a group scheduling identifier, a periodicity parameter of group scheduling, a transmission parameter used for group scheduling, and validity region information corresponding to group scheduling, and there is at least one validity region corresponding to the group scheduling.

Optionally, the target data transmitted based on the common channel does not carry or correspond to identity identification information, and the identity identification information is used to identify the first terminal.

Optionally, the second transmission module 910 is further configured to transmit the shared information or the shared resource scheduling information.

Optionally, the step that the second transmission module 910 transmits the shared information or the shared resource scheduling information includes: in a case that authentication on a data plane function of the first terminal succeeds or the first terminal enables the data plane function, transmitting radio resource control RRC signaling to the first terminal, where the RRC signaling includes the shared information or the shared resource scheduling information, and the RRC signaling is dedicated to transmitting the shared information or the shared resource scheduling information to the first terminal; or transmitting common signaling to the first terminal, where the common signaling includes the shared information or the shared resource scheduling information.

Optionally, the second transmission module 910 is further configured to transmit an authentication success result to the first terminal. The authentication success result indicates that the first terminal is allowed to perform data plane reporting, or indicates that the first terminal is allowed to transmit the target data by using the shared information or the shared resource scheduling information.

Optionally, a transmission trigger time of the RRC signaling is determined according to any one of the following: a first time, where the first time is a time when the first terminal completes the authentication on the data plane function; a second time, where the second time is a time when a core network device determines to enable data plane transmission; a third time, where the third time is a time when the first terminal determines to enable data plane transmission of the first terminal, and the authentication on the data plane function of the first terminal succeeds; and a fourth time, where the fourth time is a time when an access network device determines to enable data plane transmission.

Optionally, in a case that the shared information or the shared resource scheduling information is transmitted by using the common signaling, a validity region corresponding to the shared information or the shared resource scheduling information is the same as a validity region corresponding to the common signaling.

Optionally, in a case that the shared information includes a plurality of shared resources, the shared resources correspond to a first resource usage condition; and/or in a case that the shared resource scheduling information includes a plurality of pieces of shared scheduling information, each piece of shared scheduling information corresponds to a second resource usage condition.

Optionally, in a case that the target data includes a single data packet, a transport block used to carry the target data further includes a first indicator field and/or a second indicator field, the first indicator field indicates a length of the target data, and the second indicator field indicates padding information in the transport block; and/or in a case that the target data includes a plurality of data packets, the plurality of data packets are distinguished by using length indication information LI.

Optionally, the step that the second transmission module 910 receives target data that is transmitted based on a common channel includes: receiving the first transmission performed for the target data; and transmitting a temporary RNTI or a temporary ID, and scheduling a subsequent transmission other than the first transmission based on the temporary RNTI or the temporary ID.

Optionally, the second transmission module 910 receives a buffer status report BSR, where the BSR is used to notify the network side device of an amount of to-be-transmitted data in the first terminal; and schedules the subsequent transmission other than the first transmission according to the BSR. A transmission occasion of the BSR includes at least one of the following: the first transmission in a plurality of transmissions on the common channel; the amount of to-be-transmitted data in the first terminal is different from an amount in the last BSR reporting; a size of an uplink resource scheduled by the network side device is incapable of carrying scheduled data, but is capable of carrying one BSR; all data buffered in the first terminal has been transmitted, but there is still a remaining uplink resource, where a buffer size in the BSR equals to 0 (i.e., Buffer size = 0), or the BSR includes at least first indication information, where the first indication information indicates that all the data buffered in the first terminal has been transmitted; or there is no transmittable data for an uplink resource scheduled by the network side device based on the temporary RNTI or the temporary ID, where a buffer size in the BSR is equal to 0, or the BSR includes at least second indication information, where the second indication information indicates that all data buffered in the first terminal has been transmitted.

Optionally, in a case that the target data is transmitted through a plurality of transmissions, a plurality of data packets in the plurality of transmissions are associatively identified by using at least one of the following: a local terminal identifier; an identifier randomly allocated by the network side device; a sequence number SN; a packet number field, where the packet number field is located in at least one first data packet, and the first data packet belongs to the plurality of data packets; and a second timer, where the second timer is started when the network side device receives a second data packet, the second data packet is transmitted on a first resource, or the second data packet carries the local identifier of the first terminal, and a timeout of the second timer represents that reception of a data packet associated with the second data packet ends.

Optionally, the SN includes at least a start marker and/or an end marker.

Optionally, the second transmission module 910 is further configured to receive first information or second information. The first information or the second information includes at least data reporting failure information and/or a data reporting failure reason of the first terminal.

Optionally, the apparatus 900 further includes a release module, configured to: in a case that a fifth timer times out, release the temporary RNTI or the temporary ID. The fifth timer is started when the network side device receives, for the last time, data corresponding to the temporary RNTI or the temporary ID.

Optionally, the second transmission module 910 further includes any one of the following: transmitting first feedback information, where the first feedback information indicates whether the target data is successfully transmitted, and the first feedback information includes a positive acknowledgement ACK, a negative acknowledgement NACK, or only a positive acknowledgement only ACK; or transmitting second feedback information, where the second feedback information includes contention resolution related information, the contention resolution related information is determined by the network side device based on at least a part of the target data, and the contention resolution related information is used by the first terminal to determine whether the target data is successfully transmitted.

Optionally, the second transmission module 910 further includes: in a case that the network side device is an access network device, transmitting the target data to the core network device based on a common pipeline. The target data transmitted based on the common pipeline does not carry or correspond to identity identification information, and the identity identification information is used by the core network device to identify an identity of a transmitting end of the target data.

The data transmission apparatus 900 in this embodiment of this application may be a network side device. The network side device may include but is not limited to the foregoing listed types of the network side device 12. This is not specifically limited in this embodiment of this application.

The data transmission apparatus 900 provided in this embodiment of this application can implement processes implemented in the method embodiment of FIG. 7, and achieve the same technical effects. To avoid repetition, details are not described herein again.

An embodiment of this application further provides a terminal, including a processor and a communication interface. The communication interface is coupled to the processor, and the processor is configured to run a program or instructions, to implement steps of the methods in the method embodiments 200 to 600. The terminal embodiment corresponds to the foregoing terminal side method embodiment, and each implementation process and implementation manner of the foregoing method embodiment are applicable to the terminal embodiment, and the same technical effect can be achieved. Specifically, FIG. 10 is a diagram of a hardware structure of a terminal according to an embodiment of this application.

The terminal 1000 includes but is not limited to at least some components of a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

Persons skilled in the art can understand that the terminal 1000 may further include a power supply (such as a battery) for supplying power to the components. The power supply may be logically connected to the processor 1010 by using a power management system, to implement functions such as charging, discharging, and power consumption management by using the power management system. The terminal structure shown in FIG. 10 does not constitute a limitation on the terminal, and the terminal may include more or fewer components than shown those shown in the figure, or combine some components, or have a different component arrangement. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (such as a camera) in a video capture mode or an image capture mode. The display unit 1006 may include a display panel 10061, and the display panel 10061 may be configured in a form of a liquid crystal display, an organic light emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a switch button), a track ball, a mouse, and a joystick. Details are not described herein.

In this embodiment of this application, after receiving downlink data from a network side device, the radio frequency unit 1001 may transmit the downlink data to the processor 1010 for processing. In addition, the radio frequency unit 1001 may transmit uplink data to the network side device. Generally, the radio frequency unit 1001 includes but is not limited to an antenna, an amplifier, a transceiver, a coupler, a low noise amplifier, a duplexer, and the like.

The memory 1009 may be configured to store a software program or instructions and various data. The memory 1009 may mainly include a first storage area for storing the program or instructions and a second storage area for storing the data. The first storage area may store an operating system, an application program or instructions required for at least one function (such as a sound playing function or an image playing function), and the like. In addition, the memory 1009 may include a volatile memory or a non-volatile memory, or the memory 1009 may include both a volatile and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch Link DRAM, SLDRAM), and a direct rambus dynamic random access memory (Direct Rambus RAM, DR RAM). The memory 1009 in this embodiment of this application includes but is not limited to these and any other memory of a suitable type.

The processor 1010 may include one or more processing units. Optionally, the processor 1010 integrates an application processor and a modem processor. The application processor mainly processes operations related to an operating system, a user interface, an application program, and the like. The modem processor mainly processes a wireless communication signal, such as a baseband processor. It can be understood that the modem processor may alternatively not be integrated into the processor 1010.

The radio frequency unit 1001 is configured to transmit target data to the network side device based on a common channel. The target data is non-control-plane data. The common channel is a channel for a terminal group to perform resource sharing, the terminal group includes a plurality of terminals, and the plurality of terminals include the first terminal.

In this embodiment, the terminal transmits the target data to the network side device based on the common channel. In this way, problems of large signaling overheads and long transmission delay caused by RRC connection establishment, terminal state transition, and the like can be avoided, and privacy of the terminal can be effectively ensured.

An embodiment of this application further provides a network side device, including a processor and a communication interface. The communication interface is coupled to the processor, and the processor is configured to run a program or instructions, to implement steps of the method in the method embodiment 700. The network side device embodiment corresponds to the foregoing network side device method embodiment, and each implementation process and implementation manner of the foregoing method embodiment are applicable to the network side device embodiment, and the same technical effect can be achieved.

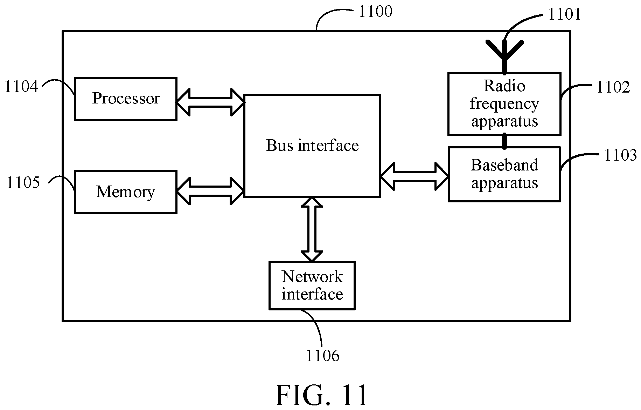

Specifically, an embodiment of this application further provides a network side device. As shown in FIG. 11, the network side device 1100 includes: an antenna 1101, a radio frequency apparatus 1102, a baseband apparatus 1103, a processor 1104, and a memory 1105. The antenna 1101 is connected to the radio frequency apparatus 1102. In an uplink direction, the radio frequency apparatus 1102 receives information by using the antenna 1101, and transmits the received information to the baseband apparatus 1103 for processing. In a downlink direction, the baseband apparatus 1103 processes information to be transmitted, and transmits the information to the radio frequency apparatus 1102, and the radio frequency apparatus 1102 processes the received information and then transmits the information by using the antenna 1101.

The method performed by the network side device in the foregoing embodiment may be implemented in the baseband apparatus 1103. The baseband apparatus 1103 includes a baseband processor.

The baseband apparatus 1103 may include, for example, at least one baseband board, and a plurality of chips are disposed on the baseband board. As shown in FIG. 11, one of the chips is, for example, the baseband processor, which is connected to the memory 1105 through a bus interface, to invoke a program in the memory 1105 to perform a network side device operation described in the foregoing method embodiment.

The network side device may further include a network interface 1106. The interface is, for example, a common public radio interface (common public radio interface, CPRI).

Specifically, the network side device 1100 in this embodiment of this application further includes a program or instructions stored in the memory 1105 and executable on the processor 1104. The processor 1104 invokes the program or instructions in the memory 1105 to perform the method performed by each module shown in FIG. 9, and achieves the same technical effects. To avoid repetition, details are not described herein again.

An embodiment of this application further provides a readable storage medium. The readable storage medium stores a program or instructions, and when the program or instructions are executed by a processor, processes of the foregoing data transmission method embodiment are implemented, and the same technical effects can be achieved. To avoid repetition, details are not described herein again.

The processor is the processor in the terminal in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a network side device program or instructions to implement processes of the foregoing data transmission method embodiment, and can achieve the same technical effects. To avoid repetition, details are not described herein again.

It should be understood that the chip in this embodiment of this application may also be referred to as a system-on-a-chip, a system chip, a chip system, a system on chip, or the like.

An embodiment of this application further provides a computer program product. The computer program product includes a processor, a memory, and a program or instructions that are stored in the memory and that can run on the processor, and when the program or instructions are executed by the processor, processes of the foregoing data transmission method embodiment are implemented, and the same technical effects can be achieved. To avoid repetition, details are not described herein again.

An embodiment of this application further provides a wireless communication system, including: a terminal and a network side device. The terminal may be configured to perform steps of the method embodiments 200 to 600, and the network side device may be configured to perform steps of the method embodiment 700.

It should be noted that, the terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Unless otherwise specified, an element limited by "include a/an..." does not exclude other same elements existing in the process, method, object, or apparatus that includes the element. Moreover, it should be noted that the scope of the method and apparatus in the embodiments of this application is not limited to executing the functions in the order shown or discussed, but may include executing the functions in a substantially concurrent manner or in a reverse order depending on the related functions. For example, the method described may be performed in an order different from that described, and various steps may be further added, omitted, or combined. In addition, features described in some examples may be combined in other examples.

Based on the foregoing descriptions of the embodiments, persons skilled in the art may clearly understand that the methods of the foregoing embodiments may be implemented by software in addition to a necessary universal hardware platform or by hardware. In most circumstances, the former is an example implementation. Based on such understanding, the technical solutions of the embodiments of this application essentially, or the part contributing to a conventional technology may be implemented in a form of a computer software product. The computer software product may be stored in a storage medium (such as a ROM/RAM, a magnetic disk, or an optical disc), and include several instructions for instructing a terminal (which may be a mobile phone, a computer, a server, an air conditioner, a network device, or the like) to perform the methods according to the embodiments of this application.

The embodiments of this application have been described above with reference to the accompanying drawings, but this application is not limited to the specific embodiments, and the specific embodiments are merely examples rather than limitative. Persons of ordinary skill in the art may make various variations under the teaching of this application without departing from the essence of this application and the protection scope of the claims, and such variations shall all fall within the protection scope of this application.

## Claims

1. A data transmission method, comprising:
transmitting, by a first terminal, target data to a network side device based on a common channel, wherein the target data is non-control-plane data;
the common channel is a channel for a terminal group to perform resource sharing, the terminal group comprises a plurality of terminals, and the plurality of terminals comprise the first terminal.

2. The method according to claim 1, wherein the step of transmitting, by a first terminal, target data to a network side device based on a common channel comprises:
transmitting, by the first terminal, the target data to the network side device according to shared information or shared resource scheduling information, wherein the shared information comprises at least one of shared resource information and shared configuration information, and the shared resource scheduling information is used to obtain the shared resource information.

3. The method according to claim 2, wherein the shared information comprises at least one of the following:
time domain information of a shared resource;
frequency domain information of the shared resource;
code domain information of the shared resource;
a transmission parameter used for the shared resource;
periodicity information of the shared resource;
transport block size information of the shared resource;
related feedback information of the shared resource;
reuse information of the shared resource; and
validity region information corresponding to the shared resource, wherein there is at least one validity region corresponding to the shared resource; and/or
the shared configuration information comprises at least one of the following:
radio-bearer-level configuration information of a data radio bearer; and
configuration information of a radio link control RLC bearer of the data radio bearer.

4. The method according to claim 2, wherein the shared resource scheduling information comprises terminal group scheduling information, and the terminal group scheduling information comprises at least one of the following:
terminal group scheduling configuration information; and
group scheduling configuration change information of the terminal group, wherein the group scheduling configuration change information indicates that the terminal group scheduling configuration information is changed;
wherein the terminal group scheduling configuration information comprises at least one of a group scheduling identifier, a periodicity parameter of group scheduling, a transmission parameter used for group scheduling, and validity region information corresponding to group scheduling, and there is at least one validity region corresponding to the group scheduling.

5. The method according to any one of claims 1 to 4, wherein the target data transmitted based on the common channel does not carry or correspond to identity identification information, and the identity identification information is used to identify the first terminal.

6. The method according to any one of claims 2 to 5, wherein the method further comprises:
obtaining, by the first terminal, the shared information or the shared resource scheduling information transmitted by the network side device.

7. The method according to claim 5, wherein the step of obtaining, by the first terminal, the shared information or the shared resource scheduling information transmitted by the network side device comprises:
in a case that authentication on a data plane function of the first terminal succeeds or the first terminal enables the data plane function, receiving, by the first terminal, radio resource control RRC signaling from the network side device, wherein the RRC signaling comprises the shared information or the shared resource scheduling information, and the RRC signaling is dedicated to transmitting the shared information or the shared resource scheduling information to the first terminal; or
receiving, by the first terminal, common signaling from the network side device, wherein the common signaling comprises the shared information or the shared resource scheduling information.

8. The method according to claim 7, wherein the method further comprises:
receiving, by the first terminal, an authentication success result, wherein the authentication success result indicates that the terminal is allowed to perform data plane reporting, or indicates that the first terminal is allowed to perform data transmission by using the shared information or the shared resource scheduling information.

9. The method according to claim 7, wherein a transmission trigger time of the RRC signaling is determined according to any one of the following:
a first time, wherein the first time is a time when the first terminal completes the authentication on the data plane function;
a second time, wherein the second time is a time when a core network device determines to enable data plane transmission;
a third time, wherein the third time is a time when the first terminal determines to enable data plane transmission of the first terminal, and the authentication on the data plane function of the first terminal succeeds; and
a fourth time, wherein the fourth time is a time when an access network device determines to enable data plane transmission.

10. The method according to claim 9, wherein in a case that the shared information or the shared resource scheduling information is obtained from the common signaling, a validity region corresponding to the shared information or the shared resource scheduling information is the same as a validity region corresponding to the common signaling.

11. The method according to claim 7, wherein the method further comprises at least one of the following:
in a case that the shared information is obtained from the common signaling, obtaining, by the first terminal, changed shared information by monitoring a paging message; and
in a case that the shared resource scheduling information is obtained from the common signaling, obtaining, by the first terminal, changed shared resource scheduling information by monitoring a paging message, or obtaining, by the first terminal, changed shared resource scheduling information by periodically monitoring a notification.

12. The method according to any one of claims 1 to 11, wherein the step of transmitting, by a first terminal, target data to a network side device based on a common channel comprises:
determining, by the first terminal according to an action trigger time of the target data, a target resource from shared resources corresponding to the shared information; and
transmitting, by the first terminal, the target data to the network side device based on the target resource.

13. The method according to claim 11, wherein the step of determining, according to an action trigger time of the target data, a target resource from shared resources corresponding to the shared information comprises any one of the following:
determining a shared resource in the shared resources corresponding to the shared information that is closest to the action trigger time of the target data as the target resource; or
determining a time window that is closest to the action trigger time of the target data, and selecting, from the shared resources corresponding to the shared information, at least one shared resource with time domain information located in the time window as the target resource.

14. The method according to any one of claims 2 to 11, wherein in a case that the shared resources corresponding to the shared information comprise a plurality of shared resources, the shared resources correspond to a first resource usage condition;
and/or
in a case that the shared resource scheduling information comprises a plurality of pieces of shared scheduling information, the shared scheduling information corresponds to a second resource usage condition.

15. The method according to any one of claims 2 to 14, wherein the step of transmitting, by a first terminal, target data to a network side device based on a common channel comprises:
in a case that the first terminal is in the validity region corresponding to the shared information or the shared resource scheduling information, transmitting, by the first terminal, the target data on a data plane to the network side device according to the shared information or the shared resource scheduling information.

16. The method according to claim 15, wherein the method further comprises any one of the following:
in a case that the shared information or the shared resource scheduling information is obtained from the RRC signaling, and the first terminal is not in the validity region corresponding to the shared information or the shared resource scheduling information, requesting, by the first terminal, shared information or shared resource scheduling information from the network side device; or
in a case that the shared information or the shared resource scheduling information is obtained from the common signaling, and the first terminal is not in the validity region corresponding to the shared information or the shared resource scheduling information, re-obtaining, by the first terminal, shared information or shared resource scheduling information from common signaling.

17. The method according to any one of claims 1 to 16, wherein before the step of transmitting, by a first terminal, target data to a network side device based on a common channel, the method further comprises:
obtaining, by the first terminal, an uplink synchronization variable, wherein the uplink synchronization variable comprises any one of the following:
a default value;
in a case that the first terminal is in a connected state, the first terminal maintains an obtained uplink synchronization variable; or
in a case that the first terminal is in an idle state or an inactive state, the first terminal obtains the uplink synchronization variable in a two-step random access manner or a four-step random access manner;
wherein the uplink synchronization variable comprises at least a timing advance TA.

18. The method according to claim 17, wherein validity of the uplink synchronization variable is determined according to at least one of the following:
whether a first timer times out, wherein the first timer is started when the first terminal obtains the uplink synchronization variable;
whether a movement distance of the first terminal is greater than a first threshold; and
whether a change value of RSRP of the first terminal is greater than a second threshold.

19. The method according to claim 17, wherein the method further comprises:
in a case that the uplink synchronization variable is invalid, re-obtaining, by the first terminal, an uplink synchronization variable directly through a two-step random access process or a four-step random access process; or
when the first terminal further needs to transmit data to the network side device, re-obtaining, by the first terminal, an uplink synchronization variable through a two-step random access process or a four-step random access process.

20. The method according to any one of claims 1 to 19, wherein in a case that the target data comprises a single data packet, a transport block used to carry the target data further comprises a first indicator field and/or a second indicator field, the first indicator field indicates a length of the target data, and the second indicator field indicates padding information in the transport block;
or
in a case that the target data comprises a plurality of data packets, the plurality of data packets are distinguished by using length indication information LI.

21. The method according to any one of claims 1 to 20, wherein the step of transmitting, by a first terminal, target data to a network side device based on a common channel comprises:
for the target data, in a case that the first terminal needs to perform a plurality of data transmissions, performing, by the first terminal, a first transmission to the network side device based on the common channel; and
in a case that the first transmission succeeds and the first terminal receives a temporary RNTI or a temporary identifier ID fed back by the network side device, performing, by the first terminal, a subsequent transmission in the plurality of transmissions other than the first transmission based on the temporary RNTI or the temporary ID.

22. The method according to claim 21, wherein the method further comprises:
transmitting, by the first terminal, a buffer status report BSR to the network side device, wherein the BSR is used to notify the network side device of an amount of to-be-transmitted data in the first terminal; and a transmission occasion of the BSR comprises at least one of the following:
the first transmission in the plurality of transmissions on the common channel;
the amount of to-be-transmitted data in the first terminal is different from an amount in a last BSR reporting;
a size of an uplink resource scheduled by the network side device is incapable of carrying scheduled data, but is capable of carrying one BSR;
all data buffered in the first terminal has been transmitted, but there is still a remaining uplink resource, wherein a buffer size in the BSR equals to 0, or the BSR comprises at least first indication information, wherein the first indication information indicates that all the data buffered in the first terminal has been transmitted; or
there is no transmittable data for an uplink resource scheduled by the network side device based on the temporary RNTI or the temporary ID, wherein a buffer size in the BSR is equal to 0, or the BSR comprises at least second indication information, wherein the second indication information indicates that all data buffered in the first terminal has been transmitted.

23. The method according to any one of claims 1 to 22, wherein in a case that the target data is transmitted to the network side device through a plurality of transmissions, a plurality of data packets in the plurality of transmissions are associatively identified by using at least one of the following:
a local terminal identifier;
an identifier randomly allocated by the network side device;
a sequence number SN;
a packet number field, wherein the packet number field is located in at least one first data packet, and the first data packet belongs to the plurality of data packets; and
a second timer, wherein the second timer is started when the network side device receives a second data packet, the second data packet is transmitted on a first resource, or the second data packet carries the local identifier of the first terminal, and a timeout of the second timer represents that reception of a data packet associated with the second data packet ends.

24. The method according to claim 23, wherein the SN comprises at least a start marker and/or an end marker.

25. The method according to any one of claims 1 to 24, wherein the step of transmitting, by a first terminal, target data to a network side device based on a common channel comprises:
in a case that data transmission on the common channel comprises a single data transmission on the common channel and a plurality of data transmissions on the common channel, performing, by the first terminal, any one of the following:
in a case that a data amount of the target data is less than a third threshold, transmitting, by the first terminal, the target data based on the single data transmission on the common channel;
in a case that the data amount of the target data is greater than a fourth threshold, transmitting, by the first terminal, the target data based on the plurality of data transmissions on the common channel; or
determining, by the first terminal according to uplink resources respectively associated with the single data transmission on the common channel and the plurality of data transmissions on the channel, whether to transmit the target data based on the single data transmission on the common channel or the plurality of data transmissions on the common channel.

26. The method according to any one of claims 1 to 25, wherein the step of transmitting, by a first terminal, target data to a network side device based on a common channel comprises any one of the following:
for the target data, in a case that the first terminal performs the single data transmission on the common channel in a source cell but the transmission is not completed, re-performing, by the first terminal, the single data transmission on the common channel after reselection or handover to a target cell;
for the target data, in a case that the first terminal performs the plurality of data transmissions on the common channel in the source cell and reselects or hands over to the target cell during transmission, re-performing, by the first terminal, the plurality of data transmissions on the common channel in the target cell; or
for the target data, in a case that the first terminal performs the plurality of data transmissions on the common channel in the source cell and reselects or hands over to the target cell during transmission, further transmitting, by the first terminal in the target cell based on the plurality of data transmissions on the common channel, data that is in the target data and that is not transmitted, wherein each piece of data in the plurality of data transmissions on the common channel has a self-parsing characteristic.

27. The method according to claim 26, wherein the method further comprises:
in a case that the first terminal reselects or hands over to the target cell, and a related configuration for data transmission on the common channel in the target cell is different from a related configuration for data transmission on the common channel in the source cell, obtaining, by the first terminal, the related configuration for data transmission on the common channel in the target cell; and
performing, by the first terminal based on the related configuration for data transmission on the common channel in the target cell, the step of re-performing the single data transmission on the common channel, or re-performing the plurality of data transmissions on the common channel in the target cell, or further transmitting, in the target cell based on the plurality of data transmissions on the common channel, data that is in the target data and that is not transmitted.

28. The method according to any one of claims 1 to 27, wherein the method further comprises:
in a case that a first state that the first terminal is currently in conflicts with target data transmission on the common channel that currently needs to be performed, determining, by the first terminal according to at least one of the following, whether to process the first state or process the target data transmission on the common channel:
the first terminal performs determining autonomously, wherein the first state comprises a connected state, an idle state, or an inactive state;
the first terminal performs determining according to a priority order between the first state and the target data transmission on the common channel;
in a case that the first state is the connected state, the first terminal processes the first state, and processes the target data transmission on the common channel by reusing a unicast channel in the first state; or
in a case that the first state is the inactive state or the idle state, the first terminal processes the target data transmission on the common channel on an occasion other than a first occasion, wherein the first occasion comprises at least one of a paging occasion, a system information SI monitoring occasion, a measurement occasion, or a change notification monitoring occasion.

29. The method according to any one of claims 1 to 28, wherein the method further comprises:
in a case that the first terminal performs a plurality of target data transmissions on the common channel and the target data is not successfully transmitted, or in a case that a third timer times out and the target data is not successfully transmitted, performing, by the first terminal, at least one of the following:
entering, by the first terminal, a connected state, and transmitting first information to the network side device, wherein the first information comprises at least data reporting failure information and/or a data reporting failure reason; or
recording, by the first terminal, the data reporting failure reason, and transmitting second information to the network side device when entering the connected state, wherein the second information comprises at least the data reporting failure information and/or the data reporting failure reason;
wherein the third timer is started when the terminal starts the first target data transmission on the common channel.

30. The method according to any one of claims 1 to 29, wherein the method further comprises any one of the following:
in a case that the plurality of data transmissions on the common channel are completed or all the data buffered in the first terminal has been transmitted, releasing, by the first terminal, the temporary RNTI or the temporary ID; or
in a case that a fourth timer times out, releasing, by the first terminal, the temporary RNTI or the temporary ID, wherein the fourth timer is started when the first terminal triggers the last data transmission in the plurality of data transmissions on the common channel.

31. The method according to any one of claims 1 to 30, wherein the method further comprises any one of the following:
receiving, by the first terminal, first feedback information transmitted by the network side device, wherein the first feedback information indicates whether the target data is successfully transmitted, and the first feedback information comprises a positive acknowledgement ACK and a negative acknowledgement NACK, or only a positive acknowledgement only ACK; or
receiving, by the first terminal, second feedback information transmitted by the network side device, wherein the second feedback information comprises contention resolution related information, the contention resolution related information is determined by the network side device based on at least a part of the target data, and the contention resolution related information is used by the first terminal to determine whether the target data is successfully transmitted.

32. A data transmission method, comprising:
receiving, by a network side device, target data that is transmitted by a first terminal based on a common channel, wherein
the target data is non-control-plane data, the common channel is a channel for a terminal group to perform resource sharing, the terminal group comprises a plurality of terminals, and the plurality of terminals comprise the first terminal.

33. The method according to claim 32, wherein the step of receiving, by a network side device, target data that is transmitted based on a common channel comprises:
receiving, by the network side device, the target data that is transmitted by the first terminal according to shared information or shared resource scheduling information, wherein the shared information comprises at least one of shared resource information and shared configuration information, and the shared resource scheduling information is used to obtain the shared resource information.

34. The method according to claim 33, wherein the shared information comprises at least one of the following:
time domain information of a shared resource;
frequency domain information of the shared resource;
code domain information of the shared resource;
a transmission parameter used for the shared resource;
periodicity information of the shared resource;
transport block size information of the shared resource;
related feedback information of the shared resource;
reuse information of the shared resource; and
validity region information corresponding to the shared resource, wherein there is at least one validity region corresponding to the shared resource; and/or
the shared configuration information comprises at least one of the following:
radio-bearer-level configuration information of a data radio bearer; and
configuration information of a radio link control RLC bearer of the data radio bearer.

35. The method according to claim 33, wherein the shared resource scheduling information comprises terminal group scheduling information, and the terminal group scheduling information comprises at least one of the following:
terminal group scheduling configuration information; and
group scheduling configuration change information of the terminal group, wherein the group scheduling configuration change information indicates that the terminal group scheduling configuration information is changed;
wherein the terminal group scheduling configuration information comprises at least one of a group scheduling identifier, a periodicity parameter of group scheduling, a transmission parameter used for group scheduling, and validity region information corresponding to group scheduling, and there is at least one validity region corresponding to the group scheduling.

36. The method according to any one of claims 32 to 35, wherein the target data transmitted based on the common channel does not carry or correspond to identity identification information, and the identity identification information is used to identify the first terminal.

37. The method according to any one of claims 32 to 36, wherein the method further comprises:
transmitting, by the network side device, the shared information or the shared resource scheduling information.

38. The method according to claim 37, wherein the step of transmitting, by the network side device, the shared information or the shared resource scheduling information comprises:
in a case that authentication on a data plane function of the first terminal succeeds or the first terminal enables the data plane function, transmitting, by the network side device, radio resource control RRC signaling to the first terminal, wherein the RRC signaling comprises the shared information or the shared resource scheduling information, and the RRC signaling is dedicated to transmitting the shared information or the shared resource scheduling information to the first terminal; or
transmitting, by the network side device, common signaling to the first terminal, wherein the common signaling comprises the shared information or the shared resource scheduling information.

39. The method according to claim 38, wherein the method further comprises:
transmitting, by the network side device, an authentication success result to the first terminal, wherein
the authentication success result indicates that the first terminal is allowed to perform data plane reporting, or indicates that the first terminal is allowed to transmit the target data by using the shared information or the shared resource scheduling information.

40. The method according to claim 38, wherein a transmission trigger time of the RRC signaling is determined according to any one of the following:
a first time, wherein the first time is a time when the first terminal completes the authentication on the data plane function;
a second time, wherein the second time is a time when a core network device determines to enable data plane transmission;
a third time, wherein the third time is a time when the first terminal determines to enable data plane transmission of the first terminal, and the authentication on the data plane function of the first terminal succeeds; and
a fourth time, wherein the fourth time is a time when an access network device determines to enable data plane transmission.

41. The method according to claim 38, wherein in a case that the shared information or the shared resource scheduling information is transmitted by using the common signaling, a validity region corresponding to the shared information or the shared resource scheduling information is the same as a validity region corresponding to the common signaling.

42. The method according to any one of claims 32 to 41, wherein in a case that the shared information comprises a plurality of shared resources, the shared resources correspond to a first resource usage condition;
and/or
in a case that the shared resource scheduling information comprises a plurality of pieces of shared scheduling information, each piece of shared scheduling information corresponds to a second resource usage condition.

43. The method according to any one of claims 32 to 41, wherein in a case that the target data comprises a single data packet, a transport block used to carry the target data further comprises a first indicator field and/or a second indicator field, the first indicator field indicates a length of the target data, and the second indicator field indicates padding information in the transport block;
or
in a case that the target data comprises a plurality of data packets, the plurality of data packets are distinguished by using length indication information LI.

44. The method according to any one of claims 32 to 43, wherein the step of receiving, by a network side device, target data that is transmitted by a first terminal based on a common channel comprises:
receiving, by the network side device, the first transmission performed for the target data; and
transmitting, by the network side device, a temporary RNTI or a temporary ID, and scheduling a subsequent transmission other than the first transmission based on the temporary RNTI or the temporary ID.

45. The method according to claim 44, wherein the method further comprises:
receiving, by the network side device, a buffer status report BSR, wherein the BSR is used to notify the network side device of an amount of to-be-transmitted data in the first terminal; and
scheduling, by the network side device, the subsequent transmission other than the first transmission according to the BSR, wherein
a transmission occasion of the BSR comprises at least one of the following:
the first transmission in a plurality of transmissions on the common channel;
the amount of to-be-transmitted data in the first terminal is different from an amount in a last BSR reporting;
a size of an uplink resource scheduled by the network side device is incapable of carrying scheduled data, but is capable of carrying one BSR;
all data buffered in the first terminal has been transmitted, but there is still a remaining uplink resource, wherein a buffer size in the BSR equals to 0, or the BSR comprises at least first indication information, wherein the first indication information indicates that all the data buffered in the first terminal has been transmitted; or
there is no transmittable data for an uplink resource scheduled by the network side device based on the temporary RNTI or the temporary ID, wherein a buffer size in the BSR is equal to 0, or the BSR comprises at least second indication information, wherein the second indication information indicates that all data buffered in the first terminal has been transmitted.

46. The method according to any one of claims 32 to 45, wherein in a case that the target data is transmitted through a plurality of transmissions, a plurality of data packets in the plurality of transmissions are associatively identified by using at least one of the following:
a local terminal identifier;
an identifier randomly allocated by the network side device;
a sequence number SN;
a packet number field, wherein the packet number field is located in at least one first data packet, and the first data packet belongs to the plurality of data packets; and
a second timer, wherein the second timer is started when the network side device receives a second data packet, the second data packet is transmitted on a first resource, or the second data packet carries the local identifier of the first terminal, and a timeout of the second timer represents that reception of a data packet associated with the second data packet ends.

47. The method according to claim 46, wherein the SN comprises at least a start marker and/or an end marker.

48. The method according to any one of claims 32 to 47, wherein the method further comprises:
receiving, by the network side device, first information or second information, wherein the first information or the second information comprises at least data reporting failure information and/or a data reporting failure reason of the first terminal.

49. The method according to any one of claims 32 to 48, wherein the method further comprises:
in a case that a fifth timer times out, releasing, by the network side device, the temporary RNTI or the temporary ID, wherein the fifth timer is started when the network side device receives, for the last time, data corresponding to the temporary RNTI or the temporary ID.

50. The method according to any one of claims 32 to 49, wherein the method further comprises any one of the following:
transmitting, by the network side device, first feedback information, wherein the first feedback information indicates whether the target data is successfully transmitted, and the first feedback information comprises a positive acknowledgement ACK and a negative acknowledgement NACK, or only a positive acknowledgement only ACK; or
transmitting, by the network side device, second feedback information, wherein the second feedback information comprises contention resolution related information, the contention resolution related information is determined by the network side device based on at least a part of the target data, and the contention resolution related information is used by the first terminal to determine whether the target data is successfully transmitted.

51. The method according to any one of claims 32 to 50, wherein the method further comprises:
in a case that the network side device is an access network device, transmitting, by the access network device, the target data to the core network device based on a common pipeline, wherein
the target data transmitted based on the common pipeline does not carry or correspond to identity identification information, and the identity identification information is used to identify the first terminal.

52. A data transmission apparatus, applied to a first terminal, wherein the apparatus comprises:
a first transmission module, configured to transmit target data to a network side device based on a common channel, wherein the target data is non-control-plane data;
the common channel is a channel for a terminal group to perform resource sharing, the terminal group comprises a plurality of terminals, and the plurality of terminals comprise the first terminal.

53. A data transmission apparatus, applied to a network side device, wherein the apparatus comprises:
a second transmission module, configured to receive target data that is transmitted by a first terminal based on a common channel, wherein
the target data is non-control-plane data, the common channel is a channel for a terminal group to perform resource sharing, the terminal group comprises a plurality of terminals, and the plurality of terminals comprise the first terminal.

54. A terminal, comprising a processor and a memory, wherein the memory stores a program or instructions executable on the processor, and when the program or instructions are executed by the processor, steps of the data transmission method according to any one of claims 1 to 31 are implemented.

55. A network side device, comprising a processor and a memory, wherein the memory stores a program or instructions executable on the processor, and when the program or instructions are executed by the processor, steps of the data transmission method according to any one of claims 32 to 51 are implemented.

56. A readable storage medium, storing a program or instructions, wherein when the program or instructions are executed by a processor, steps of the data transmission method according to any one of claims 1 to 31 are implemented, or steps of the data transmission method according to any one of claims 32 to 51 are implemented.
